# EUROPEAN PATENT SPECIFICATION

(11) **EP 3 122 593 B1**
(45) Date of publication and mention of the grant of the patent: **18.03.2020**
(21) Application number: 15714037.7
(22) Date of filing: 24.03.2015
(51) Int. Cl.: B60P 1/00, B60P 3/035, B60P 3/06, A01D 90/08

(54) **A TRAILER**
ANHÄNGER
REMORQUE

(30) Priority: 24.03.2014 IE 20140081
(43) Date of publication of application: 01.02.2017
(73) Proprietor: Eurotecdesign Limited, Clara, County Kilkenny (IE)
(72) Inventor: CARRIGAN, Thomas Anthony, Clara County Kilkenny (IE)
(74) Representative: Gorman, Francis Fergus
(86) International application number: PCT/IE2015/000003
(87) International publication number: WO 2015/145413

(56) References cited:
- DE-A1- 2 348 420
- US-A1- 2004 022 617

## Description

The present invention relates to a trailer, and in particular, though not limited to a trailer for hauling articles such as large bales of fodder material, such as silage, hay, straw and the like.

Such large bales of fodder material may be cylindrical bales, which are commonly referred to as round bales, and which typically are of diameter of the range of 1.1 to 1.6 metres and of length of the range of 0.7 to 1.68 metres. Such bales may also be parallelepiped, which are commonly referred to as square bales. Such bales, whether round bales or square bales, when comprising silage, are wrapped with a water and impermeable plastics film material, in order to keep the bales both air and watertight. Needless to say, the trailer may be used for hauling any other types of articles.

Such bales of fodder material when formed by a baler are dropped by the baler in the field on being formed, for subsequent wrapping, if wrapping is required. When such bales are formed by a combined baler/bale wrapper, the wrapped bales are also dropped from the combined baler/bale wrapper in the field when formed. This necessitates the collection of the bales, whether wrapped or unwrapped, which are distributed randomly throughout the field. Collection of such bales, in general, is carried out using a trailer, which typically is towed through the field by a tractor from bale to bale, and the bales are loaded onto the tractor. However, due to the weight of such bales, manual loading of the bales from the field into the trailer is not feasible. Thus, a second tractor equipped with a front end loader is also required for loading the bales from the field into the trailer. The collection of such bales from a field with conventional trailers, in general, is a relatively time consuming and expensive procedure, firstly, due to the fact that the bales must be loaded from the ground into the trailer by a front end loader of a tractor, which in general is a relatively slow, time-consuming task, and secondly, due to the extra cost in capital expenditure of having to provide a second tractor for the loading operation.

Additionally, unloading of such bales from such trailers, in general, requires that the bales be unloaded using a suitable unloader attached to a separate tractor. This is also a relatively time consuming task, and adds further to the cost, due to the capital required to provide a further tractor with a suitable gripping attachment for gripping the bales on the trailer. Alternatively, where such trailers have a tippable bed, the bed can be tipped to allow the bales to either roll or slide off the bed. However, where such bales have been wrapped in a water and air impermeable wrapping film, unloading of the bales by tipping the bed of the trailer can lead to damage of the wrapping film, thus exposing a portion of the wrapped fodder material to air and moisture, which in turn results in deterioration of the food value of the fodder material of the bale.

Additionally, in order to increase the capacity of trailers, it is known to provide relatively high sided trailers, so that the bales may be stacked in the trailer in layers, typically, two layers of bales one layer above the other. Farmers experience problems with such trailers, particularly in loading wrapped bales onto the trailers, since due to the relatively high sides of the trailers, it is virtually impossible to load the bales of the first layer of bales into the trailer without dropping the bales from quite a height above the bed of the trailer onto the bed thereof. This can result in bursting of the wrapping material of the bales. Any bursting, puncturing or damage to the air and watertight integrity of the wrapping material of such bales leads to the ingress of air and/or moisture, which rapidly results in deterioration of the fodder material of the bale adjacent the burst, punctured or damaged area, which gradually spreads throughout the bale, thus leaving the fodder material of the bale unsuitable for feeding to animals.

There is therefore a need for a trailer which addresses at least some of the problems associated with known trailers.

German Patent Specification No. 23 48 420 of Schildbach discloses a trailer which comprises a bed extending between a front end and a rear end spaced apart longitudinally from the front end. The bed forms a lower deck for supporting bales of fodder material, and three additional upper decks spaced apart one above the other are provided above the lower deck for supporting further bales of fodder material. A lifting mechanism is located towards the front end of the trailer and a pick-up mechanism picks up bales from the ground and delivers the bales to the lifting mechanism. The lifting mechanism lifts the bales and aligns the bales with the lower deck and the three upper decks, and a pusher mechanism pushes the bales from the lifting mechanism onto the lower and upper decks.

U.S. Published Patent Application Specification No. 2004/0022617 of Gardner discloses a trailer having a bed for carrying a plurality of stacks of hay or straw located one after the other from the front end of the bed to the rear end thereof. The stacks are loaded from the ground onto the bed at the rear end by a loading mechanism. Each stack as it is loaded is urged along the bed from the rear end forwardly by a longitudinally slideable transfer element.

The present invention is directed towards providing a trailer which addresses at least some of the problems of known trailers.

According to the invention there is provided a trailer comprising an elongated bed extending longitudinally between a first end and a second end spaced apart longitudinally from the first end, a lifting mechanism located on the trailer, a first receiving means carried on the lifting mechanism and being urgeable by the lifting mechanism from a first level adjacent the bed for receiving an article, to a second level spaced apart above the bed for raising the article to the second level, a second receiving means carried on the lifting mechanism below the first receiving means for receiving an article when the first receiving means is at the second level, the lifting mechanism with the first and second receiving means being urgeable longitudinally along the bed from a first state with the first and second receiving means located adjacent a first location on the bed for receiving the articles, to a second state adjacent a second location spaced apart longitudinally along the bed from the first location for depositing the articles from the first and second receiving means one above the other on the bed adjacent the second location.

Preferably, a first guide means is located in the bed for guiding the lifting mechanism between the first location and the second location.

Advantageously, the second receiving means is urgeable by the lifting mechanism from a third level adjacent the bed for receiving an article to a fourth level above the third level and just above the bed for accommodating movement of the second receiving means along the bed between the first and second locations.

Preferably, the second receiving means is slideably mounted on the lifting mechanism, and is slideable between the third and the fourth levels.

Preferably, the first receiving means is slideably mounted on the lifting mechanism, and is slideable between the first and second levels.

Advantageously, a second guide means is located in the lifting mechanism for guiding the first and second receiving means between the first and second levels and the third and fourth levels, respectively.

In one aspect of the invention each receiving means comprises at least one receiving element. Preferably, each receiving means comprises a pair of receiving elements for supporting two articles side by side thereon. Advantageously, each receiving element comprises a pair of spaced apart elongated support members for supporting an article thereon.

In another aspect of the invention each first and second receiving means comprises a corresponding carrier member extending transversely relative to the bed, the support members of the respective first and second receiving means extending from the corresponding carrier member.

Preferably, each carrier member is slideably carried on the lifting mechanism.

In another aspect of the invention the support members of the respective carrier members extend from the corresponding carrier member in a direction towards the second end of the bed, and terminate in respective free distal ends.

Preferably, the length of the support members is substantially similar to the length of the first location longitudinally along the bed.

In another aspect of the invention a primary drive means is provided for urging the first receiving means between the first level and the second level.

In another aspect of the invention a secondary drive means is provided for urging the second receiving means between the third level and the fourth level.

Preferably, the drive transmission means comprises a drive transmission delay linkage operably coupled between the primary drive means and the second receiving means, and being responsive to operation of the primary drive means urging the first receiving means above the second level to urge the second receiving means from the third level to the fourth level.

Preferably, a main drive means is provided for urging the lifting mechanism between the first and second states.

Advantageously, the lifting mechanism is located adjacent the first end of the bed in the first state. Preferably, the lifting mechanism is located intermediate the first and second ends of the bed in the second state.

In another aspect of the invention a transfer means is provided for urging an article from the second location longitudinally along the bed in a direction towards the second end of the bed.

Preferably, the transfer means is configured for urging an article from the second location longitudinally along the bed in a direction towards the second end of the bed to a third location, the third location being between the second location and the second end of the bed.

In another aspect of the invention the third location is located next to the second location.

In another aspect of the invention the transfer means comprises an abutment means carried on the lifting mechanism, the abutment means being configured for engaging an article in the second location when the lifting mechanism is in the first state for urging the article from the second location in the direction towards the second end of the bed when the lifting mechanism is urged from the first state to the second state. Preferably, the abutment means is mounted on one of the first and second receiving means.

Advantageously, the abutment means is mounted on the second receiving means. Ideally, the abutment means is operable between an inoperative state and an operative state for engaging an article.

In one aspect of the invention a first urging means is provided for urging the abutment means between the inoperative state and the operative state. Preferably, the abutment means comprises an abutment member.

Preferably, the abutment means is pivotally coupled to the second receiving means, and advantageously, a pair of abutment means is provided, and advantageously, each abutment means is urged between the operative state and the inoperative state by a corresponding first urging means. Advantageously, each abutment member is pivotally coupled adjacent a distal end of a corresponding one of the support members of the second receiving means, and preferably is pivotal between the inoperative state with the abutment means lying substantially parallel and adjacent the corresponding support member, and the operative state extending substantially transversely of the corresponding support member and of the bed.

In one aspect of the invention the trailer comprises a pick-up mechanism, the pick-up mechanism being urgeable from a pick-up state for engaging and holding an article adjacent the ground to a delivery state for delivering the articles onto one of the first and second receiving means.

In another aspect of the invention a second urging means is provided for urging the pick-up mechanism from the pick-up state to a delivery state.

Preferably, the pick-up mechanism is pivotal relative to the bed about a first pivot axis, and is pivotal about the first pivot axis between the pick-up state and the delivery state. Preferably, the first pivot axis of the pick-up mechanism extends in a general direction parallel to the direction of normal forward motion of the trailer, and advantageously, the pick-up mechanism is pivotally coupled to the bed about the first pivot axis.

In one aspect of the invention, the pick-up mechanism is configured for delivering respective articles onto the first and second receiving means with a longitudinal central geometrical axis of each article extending generally parallel to the direction of normal forward motion of the trailer.

In another aspect of the invention, the pick-up mechanism comprises a pick-up means configured to engage an article on the ground when the pick-up mechanism is in the pick-up state.

Preferably, the pick-up means is configured when the pick-up mechanism is in the pick-up state to engage an article with the longitudinal central geometrical axis of the article extending generally parallel to the direction of normal forward motion of the trailer.

In one aspect of the invention, the pick-up means is rigidly coupled to the pick-up mechanism.

In another aspect of the invention, the pick-up means is configured when the pick-up mechanism is in the pick-up state to engage an article on the ground with the longitudinal central geometrical axis of the article extending generally transversely to the direction of normal forward motion of the trailer.

In a further aspect of the invention, the pick-up means is configured for orienting an article through an angle of approximately 90° when viewed in plan.

Preferably, the pick-up means is operable through the angle of approximately 90° between a first state for engaging an article with a longitudinal central geometrical axis of the article extending generally transversely of the direction of normal forward motion of the trailer and a second state with the longitudinal central geometrical axis of the article extending generally parallel to the direction of normal forward motion of the trailer.

In one aspect of the invention, the pick-up means is pivotal relative to the bed about a second pivot axis, and is pivotal about the second pivot axis between the first state and the second state. Preferably, the second pivot axis extends generally orthogonally relative to the first pivot axis of the pick-up mechanism.

Advantageously, the pick-up means is pivotally coupled to the pick-up mechanism about the second pivot axis.

In another aspect of the invention, the pick-up means is urgeable from the first state to the second state prior to the pick-up mechanism being urged from the pick-up state to the delivery state.

In a further aspect of the invention, a swivelling means is provided for swivelling the pick-up means between the first state and the second state.

In another aspect of the invention, the pick-up means comprises a clamping element having a pair of spaced apart clamp jaws urgeable towards each other for engaging and clamping an article therebetween, and preferably, the clamp jaws of the clamping element define an open mouth for engaging an article therebetween.

In another aspect of the invention, the clamping element is coupled to the pick-up mechanism so that when the pick-up mechanism is in the pick-up state the open mouth defined by the clamp jaws faces generally forwardly relative to the direction of normal forward motion of the trailer, and preferably, the clamping element is coupled to the pick-up mechanism so that when the pick-up means is in the first state the open mouth defined by the clamp jaws faces generally forwardly relative to the direction of normal forward motion of the trailer, and when the pick-up means is in the second state the open mouth defined by the clamp jaws faces generally transversely relative to the direction of normal forward motion of the trailer.

In another aspect of the invention the pick-up mean comprises a pair of spaced apart pick-up tines extending from the pick-up mechanism in a general direction parallel to the direction of normal forward motion of the trailer, the pick-up tines terminating in respective free distal ends.

Preferably, the distal ends of the pick-up tines are directed in a generally forward direction relative to the direction of normal forward motion of the trailer.

Advantageously, the pick-up tines are configured to engage beneath an article on the ground for lifting the article from the ground.

Advantageously, the spacing between the pick-up tines is adjustable for accommodating articles of different sizes.

In one aspect of the invention a third urging means is provided for adjusting the spacing between the pick-up tines.

Advantageously, an outer one of the pick-up tines is urgeable relative to an inner one of the pick-up tines for drawing an article towards the trailer, and advantageously, the outer one of the pick-up tines is urgeable towards the inner one of the pick-up tines for urging a bale towards the inner one of the pick-up tines.

Preferably, the pick-up mechanism is located to one side of the trailer and extends transversely sidewardly from the trailer when in the pick-up state.

In one aspect of the invention a moveable portion of the bed adjacent the second end thereof is moveably coupled to the trailer, and is moveable from a hauling state defining a corresponding portion of the bed to a discharge state for discharging articles from the trailer with the articles oriented through an angle of approximately 90° when viewed in elevation.

Preferably, the moveable portion of the bed is pivotally coupled to the trailer about a third pivot axis adjacent the second end thereof, and is pivotal about the third pivot axis from the hauling state to the discharge state.

Advantageously, the moveable portion of the bed is pivotal about the third pivot axis through an angle of approximately 90° for in turn orienting article through the angle of approximately 90° as the moveable portion of the bed is pivoted from the hauling state to the discharge state.

In one aspect of the invention a tipping means is provided for urging the moveable portion of the bed between the hauling state and the discharge state.

In another aspect of the invention a first retaining means is provided adjacent the second end of the trailer for retaining articles on the bed adjacent the second end of the trailer.

Advantageously, the first retaining means is configured for retaining articles on the bed as the moveable portion of the trailer is being urged from the hauling state to the discharge state.

Preferably, the first retaining means is moveable relative to the trailer between a retaining state retaining articles adjacent the second end of the trailer on the bed, and an open state for accommodating discharge of the articles from the moveable portion of the bed when the moveable portion of the bed is being urged from the hauling state to the discharge state.

Ideally, the first retaining means is pivotally coupled to the trailer.

In another aspect of the invention a fourth urging means is provided for urging each first retaining means between the retaining state and the open state.

Ideally, the first retaining means comprises a pair of spaced apart upstanding members extending upwardly from the bed and pivotally coupled to the trailer between the retaining state extending upwardly adjacent the bed in an open mouth defined by the trailer adjacent the second end thereof, and the open state with the retaining members clear of the open mouth of the trailer.

In one aspect of the invention a second retaining means is provided adjacent a top portion of the trailer towards the second end thereof for retaining articles on the bed adjacent the second end of the trailer.

Preferably, the second retaining means is moveable relative to the trailer between a retaining state retaining articles adjacent the second end of the trailer on the bed of the trailer, and an open state for accommodating withdrawal of the trailer from articles discharged from the trailer onto the ground.

Advantageously, a fifth urging means is provided for urging the second retaining means between the retaining state and the open state.

Preferably, the second retaining means is pivotally coupled to the trailer.

In one aspect of the invention the trailer is adapted for hauling bales of forage material.

In another aspect of the invention the trailer is adapted for hauling two layers of bales of forage material, one layer being located on top of the other layer, the bales in each layer being arranged in pairs of bales with the bales of each layer being located side by side relative to each other.

Preferably, the trailer is adapted for towing behind a towing vehicle.

The advantages of the invention are many. A particularly important advantage of the invention is that the provision of the lifting mechanism allows articles such as bales of fodder material to be stacked on the trailer in two layers, one above the other. Additionally, the provision of the lifting mechanism also allows the bales when stacked in two layers one above the other on the lifting mechanism to be transferred still in layered formation and deposited onto the bed of the trailer, and in turn to be urged in the layered formation along the bed of the trailer from the first end of the trailer to the second end thereof. These two advantages are particularly important advantages, in that they minimise the amount of handling of the bale, and in particular, minimise, if not totally eliminate, any risk of damage to wrapping material of wrapped bales, as well as avoiding the requirement of additional machinery and equipment, as well as additional manpower.

The provision of the pick-up mechanism provides the advantage that articles such as bales of fodder material can be picked up from the ground and loaded onto the trailer without any handling of the bale, and without the requirement of any additional machinery, equipment or manpower

The provision of the moveable portion of the bed whereby the moveable portion is moveable between the hauling state and the discharge state provides for articles, and in particular, large round bales to be discharged from the trailer with the bales having been oriented through an angle of approximately 90° from being disposed on the trailer with the longitudinal central geometrical axes of the bales extending substantially horizontally to being disposed substantially vertically. This is a particularly important advantage, since the number of layers of wrapping material on the radially opposite ends of the bale is significantly greater than the number of layers of wrapping material which cover the circumferential surface of the bale. Thus, by unloading the bales from the trailer with the central geometrical axis of the bale extending substantially vertically, the bales are supported on the ground with one of the radial opposite ends resting on the ground, and bales are supported one above the other with the bales supported on one of their radially opposite ends.

Accordingly, when the trailer is provided with the pick-up mechanism and the moveable portion of the bed of the trailer, articles, such as round bales of fodder material, and indeed parallelepiped bales of fodder material, can be loaded onto the trailer from the field or elsewhere and can be unloaded from the trailer without the need for any additional machinery, equipment or manpower.

The invention will be more clearly understood from the following description of some preferred embodiments thereof, which are given by way of example only, with reference to the accompanying drawings, in which:
Fig. 1 is a perspective view of the trailer according to the invention,
Fig. 2 is another perspective view of the trailer of Fig. 1,
Fig. 3 is a side elevational view of the trailer of Fig. 1,
Fig. 4 is a rear end elevational view of the trailer of Fig. 1,
Fig. 5 is a front end elevational view of the trailer of Fig. 1,
Fig. 6 is a cross-sectional side elevational view of the trailer of Fig. 1,
Fig. 7 is another cross-sectional side elevational view of the trailer of Fig. 1 with a portion of the trailer illustrated in a different state to that of Fig. 6,
Fig. 8 is another perspective view of the trailer of Fig. 1,
Fig. 9 is a front elevational view of the trailer of Fig. 1,
Fig. 10 is a side elevational view of the trailer of Fig. 1 with another portion of the trailer illustrated in a different state to that of Fig. 1,
Fig. 11 is another front end elevational view of the trailer of Fig. 1,
Fig. 12 is a perspective view of the trailer of Fig. 1 with a portion of the trailer illustrated in a similar state to that of Fig. 7,
Fig. 13 is a perspective view of a portion of the trailer of Fig. 1,
Fig. 14 is a perspective view of the portion of Fig. 13 of the trailer of Fig. 1,
Fig. 15 is a perspective view of a detail of the portion of Fig. 13 of the trailer of Fig. 1,
Fig. 16 is another perspective view of the detail of Fig. 15 illustrating a portion of the detail in a different state to that of Fig. 15,
Fig. 17 is a perspective view of another detail of the portion of Fig. 13 of the trailer of Fig. 1,
Fig. 18 is a side elevational view of the detail of Fig. 17,
Fig. 19 is another perspective view of the detail of Fig. 13,
Fig. 20 is a top plan view of another portion of the trailer of Fig. 1,
Fig. 21 is a cross-sectional side elevational view of a detail of the portion of Fig. 20 of the trailer of Fig. 1 on the line XXI-XXI of Fig. 20,
Fig. 22 is a perspective view of the trailer of Fig. 1 with a portion of the trailer illustrated in the state of Fig. 10,
Fig. 23 is a cross-sectional side elevational view of a portion of the trailer of Fig. 1,
Fig. 24 is a perspective view of another portion of the trailer of Fig. 1,
Fig. 25 is a side elevational view of a trailer according to another embodiment of the invention,
Fig. 26 is a top plan view of a portion of the trailer of Fig. 25,
Fig. 27 is a perspective view of the portion of Fig. 26 of the trailer of Fig. 25,
Fig. 28 is an enlarged perspective view of a detail of the portion of Fig. 27 of the trailer of Fig. 25,
Fig. 29 is another perspective view of the portion of Fig. 26 of the trailer of Fig. 25,
Fig. 30 is an underneath perspective view of a detail of the portion of Fig. 29,
Fig. 31 is an end view of the portion of Fig. 26 of the trailer of Fig. 25,
Fig. 32 is a top plan view of a portion of the trailer of Fig. 25,
Fig. 33 is another top plan view of the portion of Fig. 32 of the trailer of Fig. 25,
Fig. 34 is a front elevational view of the portion of Fig. 32 of the trailer of Fig. 25 illustrating the portion in the state of Fig. 32,
Fig. 35 is another front elevational view of the portion of Fig. 32 of the trailer of Fig. 25 with the portion illustrated in the state of Fig. 33,
Fig. 36 is another front elevational view of the portion of Fig. 32 of the trailer of Fig. 25, and
Fig. 37 is a top plan view of the portion of Fig. 32 of the trailer of Fig. 25 in the state of Fig. 36.

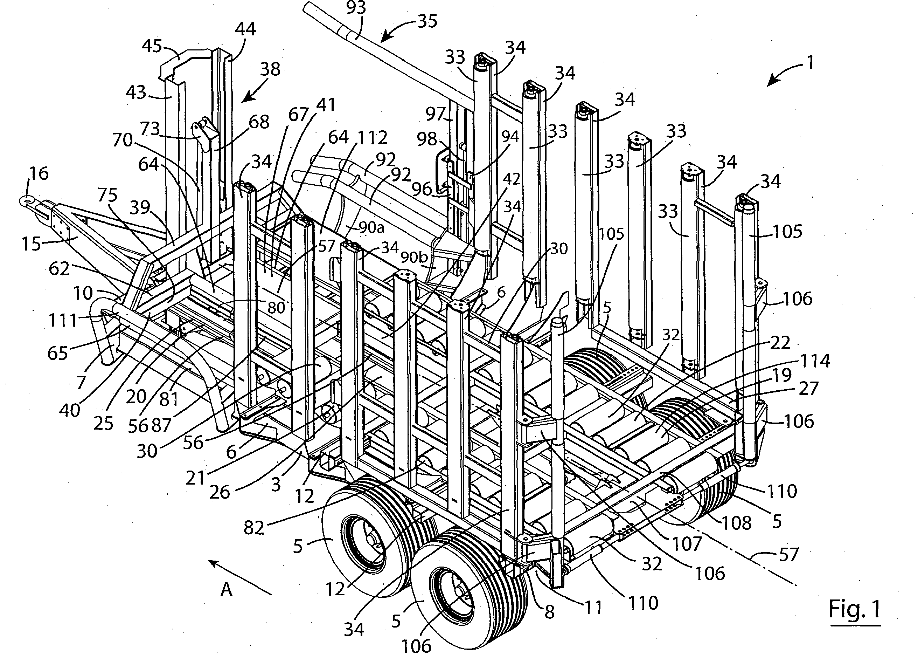

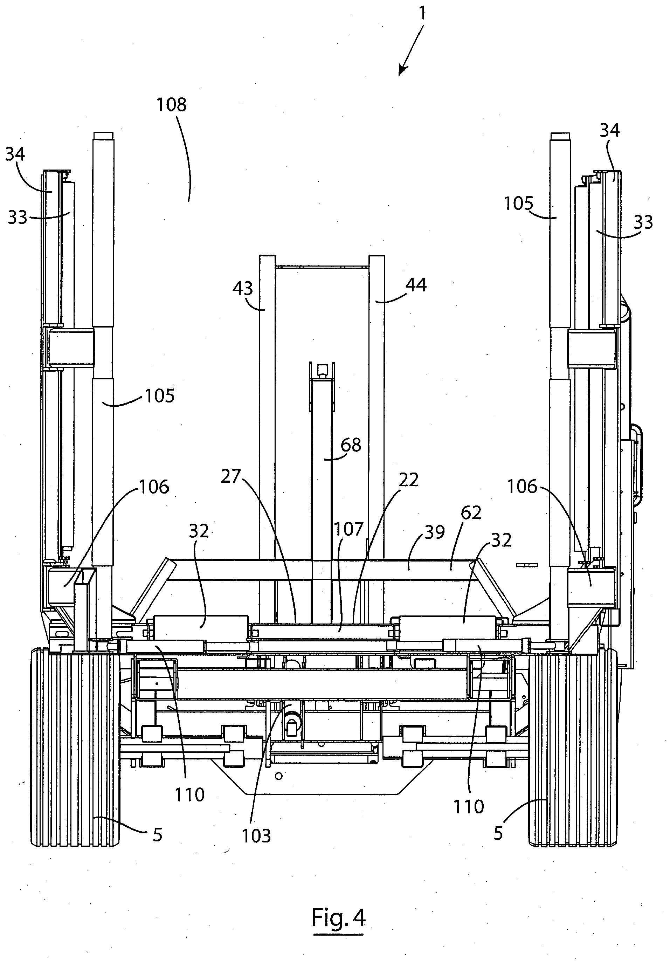

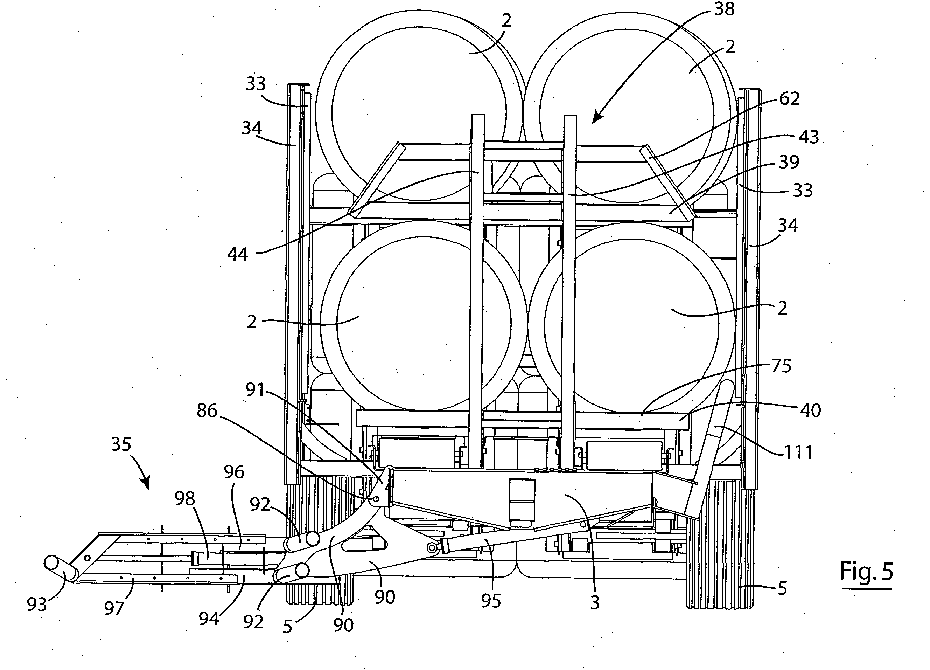

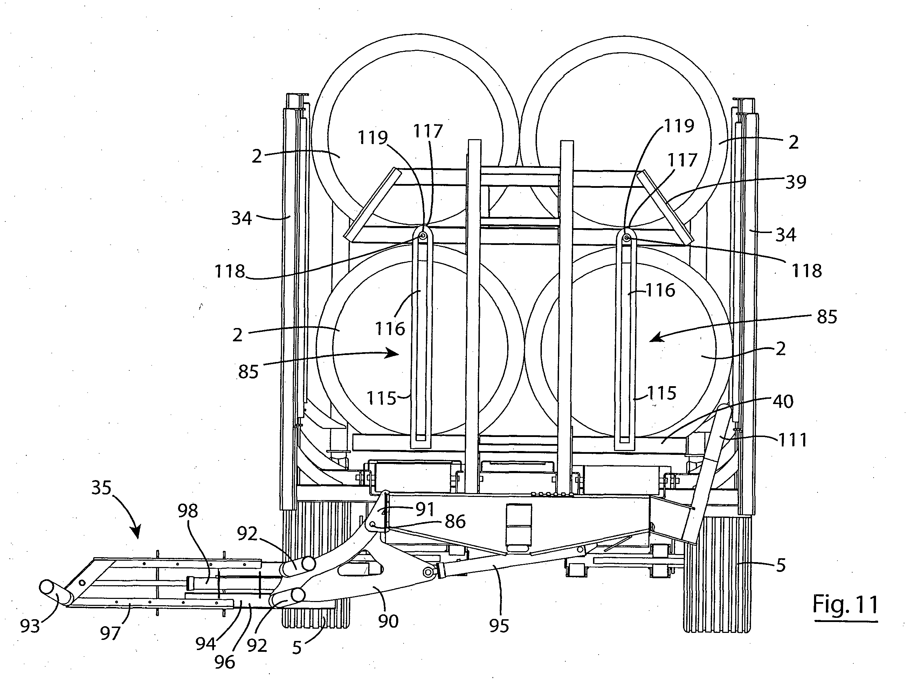

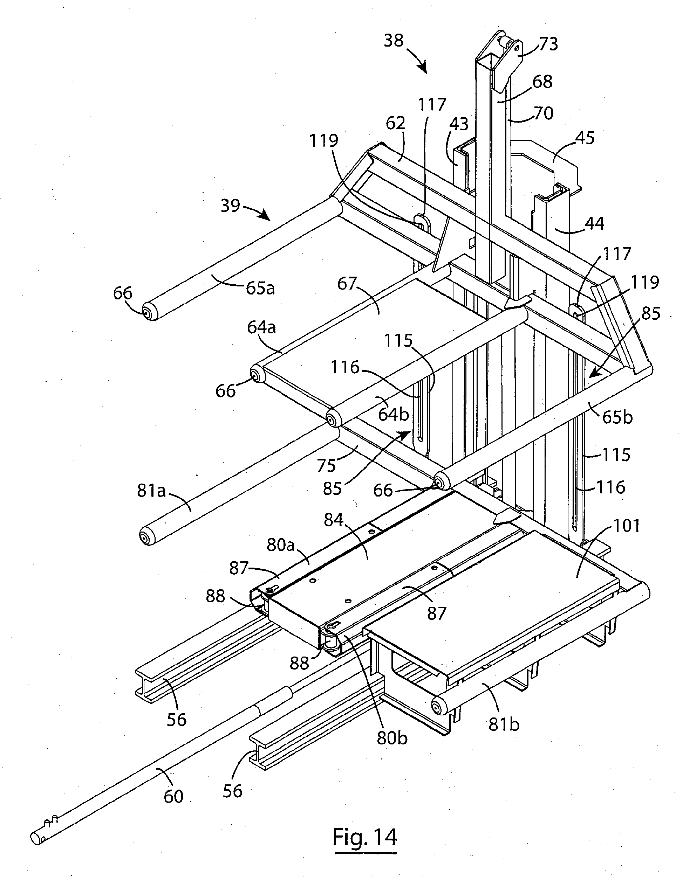

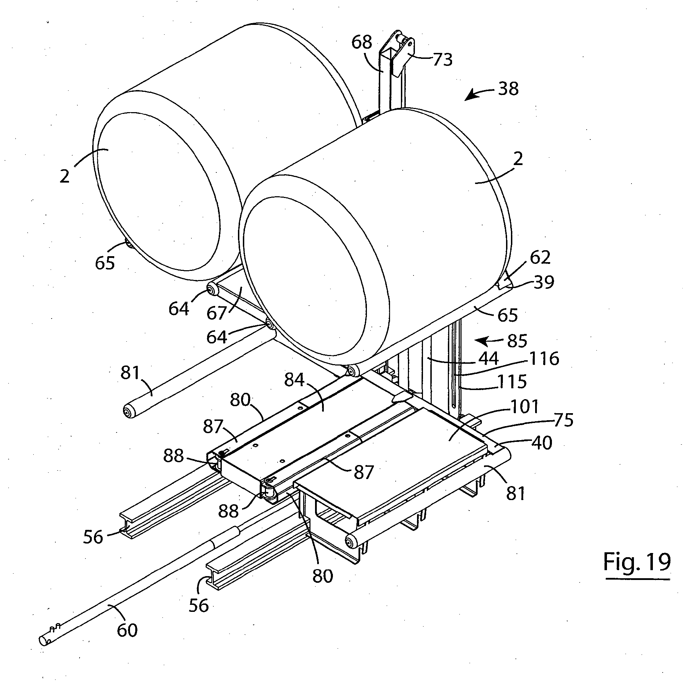

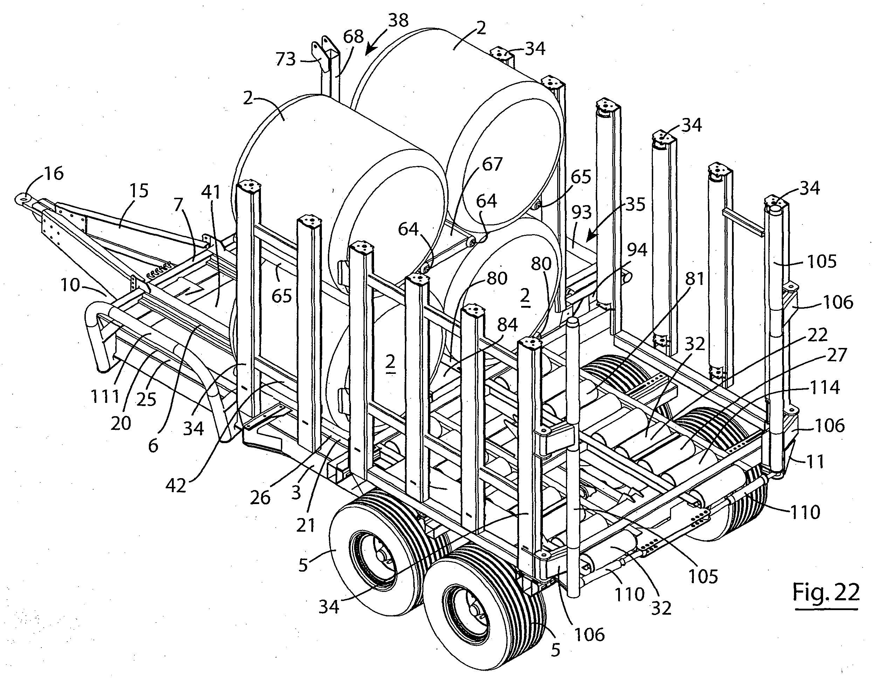

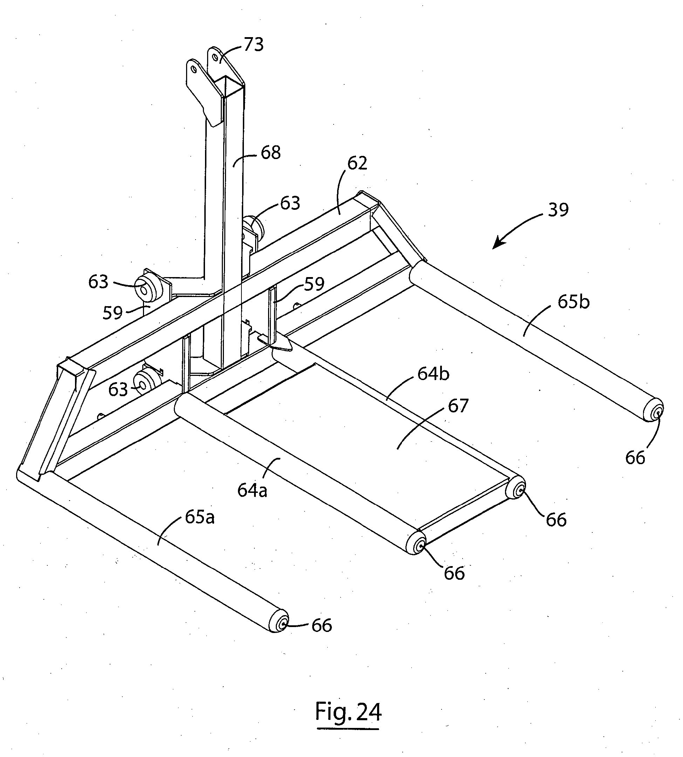

Referring to the drawings and initially to Figs. 1 to 24, there is illustrated a trailer according to the invention, indicated generally by the reference numeral 1, for hauling articles, in this case round bales 2 of fodder, namely, silage wrapped in an air and water impermeable plastics film material, with the bales 2 with their respective central geometrical axes extending horizontally. The bales 2 are arranged in two layers on the trailer, one layer above the other layer, and with the bales 2 in each layer arranged in pairs side by side relative to each other, see Fig. 5. However, needless to say, the trailer 1 may be used for hauling any other types of bales, be they square bales, parallelepiped bales or any other shape of bales, and it will also be appreciated that the trailer 1 may be used for hauling any other types of articles which would be suitable for arranging in two layers one above the other.

The trailer 1 comprises a chassis 3 which is carried on two pairs of rotatably mounted ground engaging wheels 5. The chassis 3 comprises a pair of spaced apart longitudinally extending side members 6 of channel section steel joined by front and rear transverse cross-members 7 and 8, respectively, located adjacent a first end, namely, a front end 10 of the trailer 1 and a second end, namely, a rear end 11 of the trailer 1, respectively. Intermediate cross-members 12 located at spaced apart intervals and extending transversely of and between the side members 6 reinforce the chassis 3. A forwardly extending framework 15 extends forwardly from the chassis 3 and terminates in a hitch element 16 for hitching the trailer 1 to a suitable towing vehicle, for example, a tractor or the like.

An elongated bed 19 of the trailer 1 which is formed in three sections, namely, a front section 20, an intermediate section 21 and a rear section 22 is supported on the chassis 3 for supporting the bales 2 to be hauled, extends from the front end 10 to the rear end 11 of the trailer 1. The front section 20 of the bed 19 comprises a front framework 25, while the intermediate section 21 comprises an intermediate framework 26, and the rear section 22 comprises a rear framework 27. The intermediate framework 26 comprises a pair of transversely spaced apart longitudinally extending forward roller track conveyors 30, and the rear framework 27 also comprises a pair of transversely spaced apart longitudinally extending rearward roller track conveyors 32. The rearward roller track conveyors 32 are aligned with the corresponding forward roller track conveyors 30 for accommodating movement of the bales 2 along the bed 19 towards the rear end 11 of the trailer 1 as will be described below.

A plurality of upstanding side members 34 extend upwardly from the intermediate framework 26 and the rear framework 27 on respective opposite sides thereof for retaining the bales 2 on the bed 19. Rollers 33 rotatably carried on the upstanding side members 34 accommodate movement of the bales 2 along the bed 19 towards the rear end 11 thereof.

A pick-up mechanism 35 is mounted on the chassis 3 adjacent the front end 10 of the trailer 1 and extends sidewardly therefrom for sequentially picking up bales 2 from the ground. The pick-up mechanism 35, as will be described in more detail below, is pivotal between a pick-up state illustrated in Fig. 5 for picking up a bale from the ground with the longitudinal central geometrical axis of the bale extending generally parallel to the direction of normal forward motion of the trailer 1, and a delivery state illustrated in Figs. 1, 3 and 23 for delivering the bale onto the front framework 25 of the bed 19 with the longitudinal central geometrical axis of the bale extending generally parallel to the direction of normal forward motion of the trailer 1. The direction of normal forward motion of the trailer 1 is indicated by the direction of the arrow A.

A lifting mechanism 38 is located adjacent the front end 10 of the trailer 1 and carries first and second receiving means, namely, first and second receiving elements 39 and 40, respectively, for receiving bales 2 transferred by the pick-up mechanism 35 from the ground onto the trailer 1, and in turn for urging the received bales 2 from a first location 41 which is defined by the front framework 25 to a second location 42 which is defined by the intermediate framework 26. Before describing the first and second receiving elements 39 and 40, the lifting mechanism 38 will first be described.

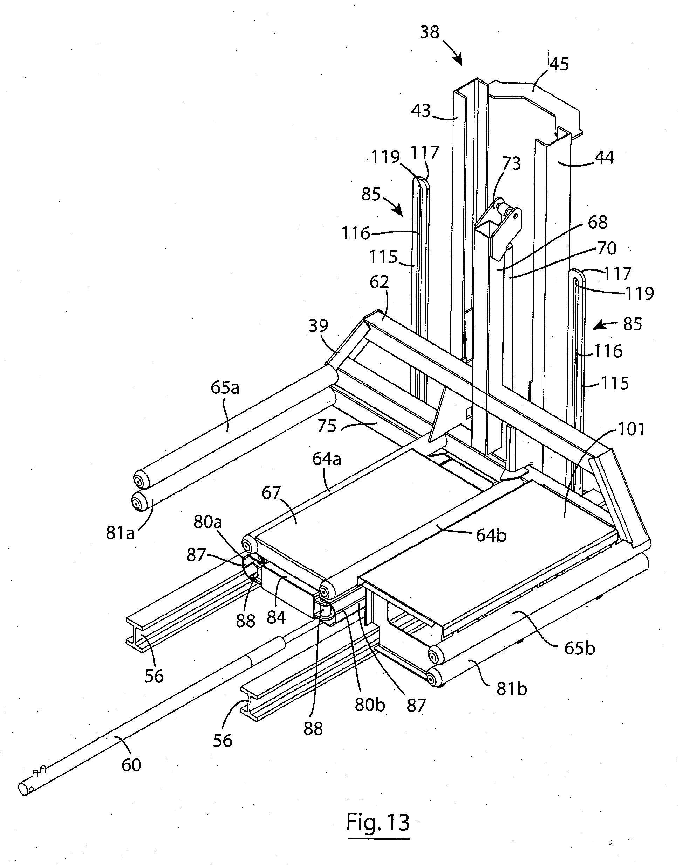

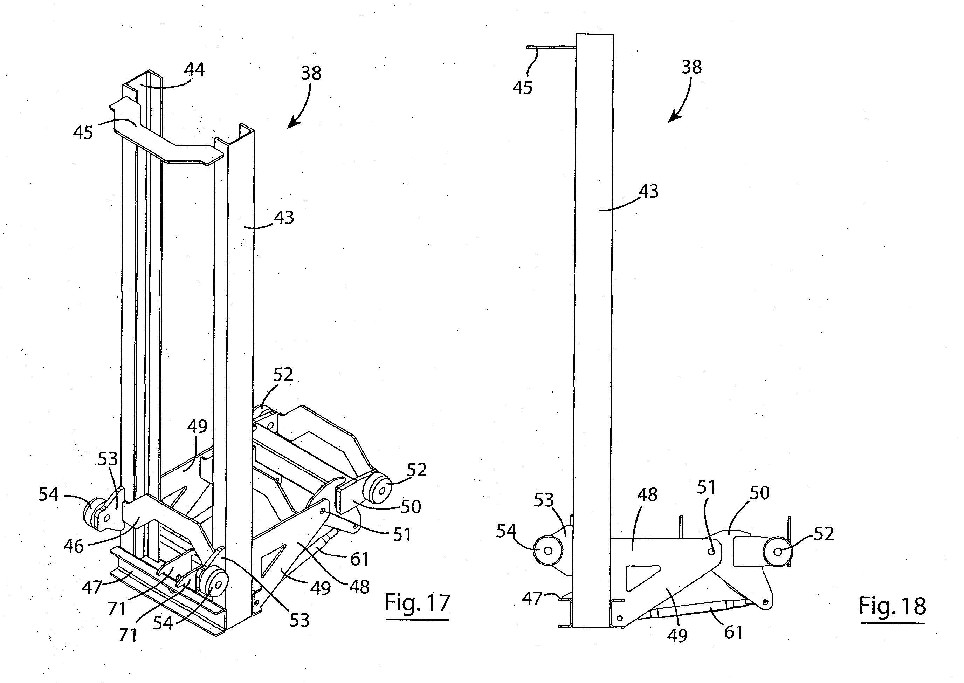

Referring in particular to Figs. 13 to 19, the lifting mechanism 38 comprises a pair of spaced apart upstanding members 43 and 44 of channel section steel which are joined by an upper cross-member 45 and a lower cross-member 46 as well as a lower channel section steel cross-member 47, see Figs. 17 and 18. A sub-chassis 48 extends rearwardly from the upstanding members 43 and 44 and comprise a pair of spaced apart side plates 49 which extend rigidly from the respective upstanding members 43 and 44 and which pivotally carry a carriage 50 on respective transversely extending pivot pins 51. The carriage 50 rotatably carries a pair of bearing rollers 52 towards the rear of the sub-chassis 48. A pair of mounting brackets 53 extending rigidly and forwardly from the upstanding members 43 and 44 carry bearing rollers 54 which are similar to the bearing rollers 52, see Figs. 17, 18 and 23.

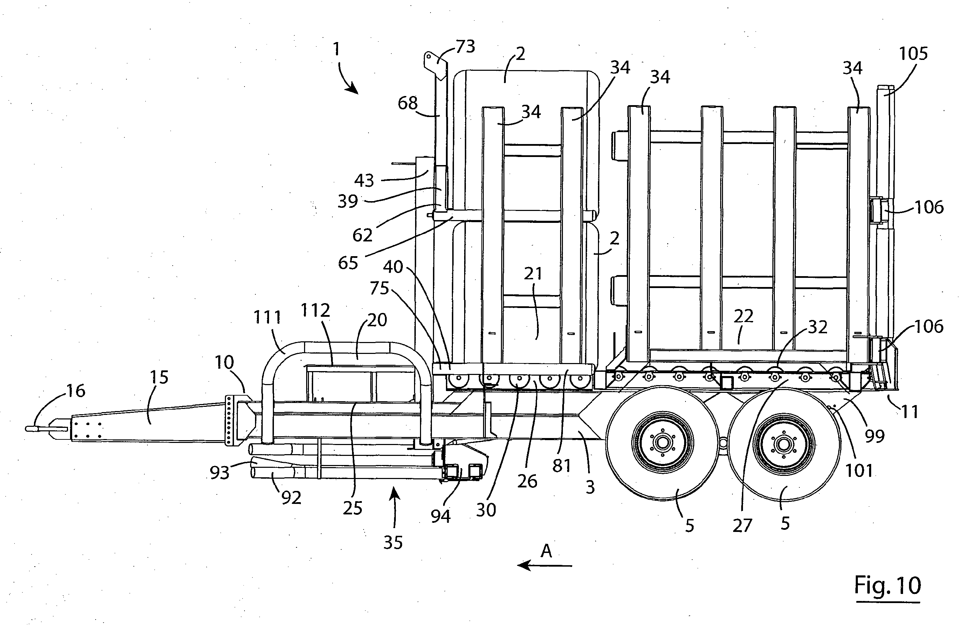

The bearing rollers 52 and 54 rollably engage a first guide means comprising respective spaced apart elongated guide tracks 56 of I-section steel which are located beneath the front framework 25 and extend longitudinally along the front framework 25, and beneath the intermediate framework 26, and are equispaced apart on opposite sides of a longitudinally extending centre line 57 of the trailer 1. The guide tracks 56 guide the lifting mechanism 38 between a first state illustrated in Fig. 1 adjacent the first location 41 with the first and second receiving elements 39 and 40 within the front framework 25, and a second state illustrated in Fig. 10 in the second location 42 with the first and second receiving elements 39 and 40 above the intermediate framework 26 for transferring the bales 2 thereon from the first location 41 to the second location 42, as will be described below. The centre line 57 of the trailer 1 extends generally parallel to the direction of normal forward motion of the trailer 1.

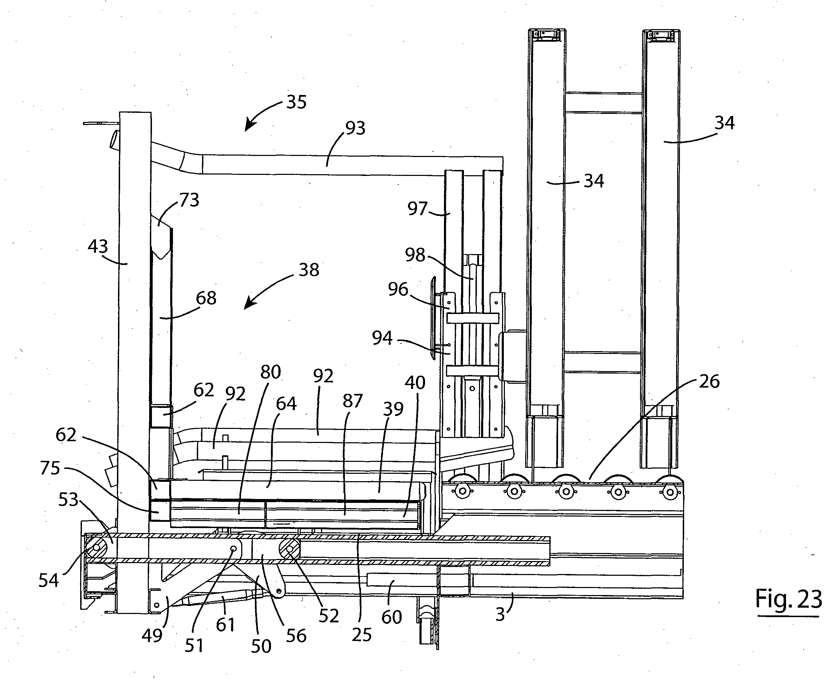

A main drive means comprising a main double-acting hydraulic drive ram 60 acting between the lifting mechanism 38 and the chassis 2 urges the lifting mechanism 38 between the first state and the second state, see Fig. 23. A double-acting rake adjusting hydraulic drive ram 61 acting between the sub-chassis 48 and the carriage 50, see Figs. 17, 18 and 23, pivots the carriage 50 about the pivot pins 51 for adjusting the rake of the upstanding members 43 and 44, and in turn the rake of the lifting mechanism 38 relative to the bed 19.

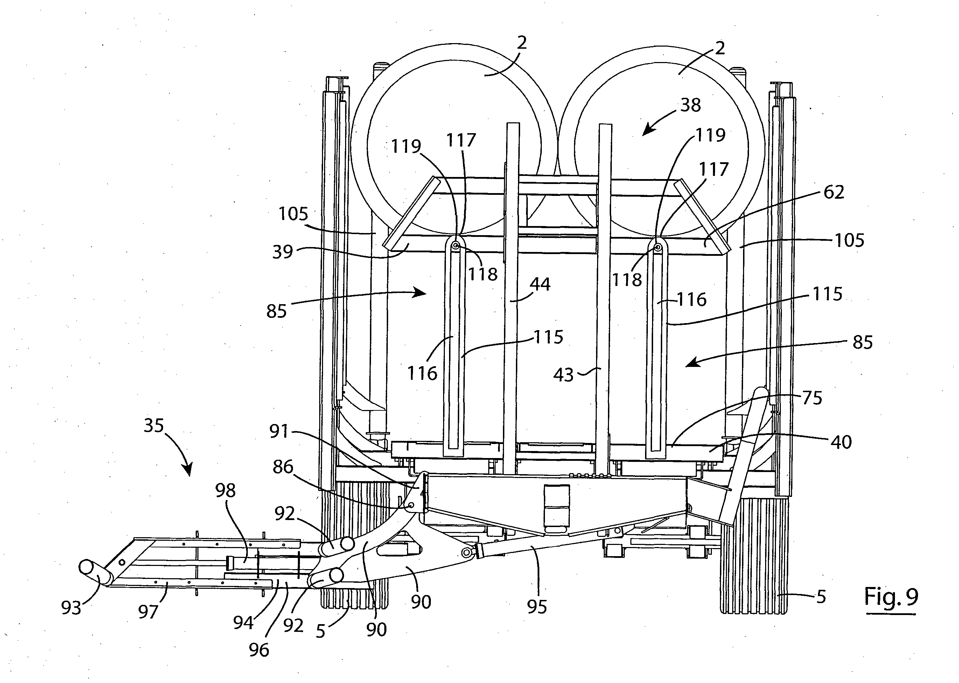

Turning now to the first receiving element 39, and referring in particular to Figs. 9, 11, 13, 14, 19 and 24, the first receiving element 39 comprises a carrier framework 62 which extends transversely relative to the trailer 1. Two pairs of mounting brackets 59 extending forwardly and rigidly from the carrier framework 62 carry respective pairs of bearing rollers 63 which rollably engage a second guide means, which in this embodiment of the invention is provided by the upstanding members 43 and 44. The bearing rollers 63 rollably engage the upstanding members 43 and 44 within the channel section thereof for guiding the carrier framework 62 of the first receiving element 39 upwardly and downwardly along the upstanding members 43 and 44 of the lifting mechanism 38. Two pairs of spaced apart elongated support members 64 and 65 extend from the carrier framework 62 in a generally rearwardly direction and terminate in free distal ends 66. The support members 64 and 65 of each pair of support members are spaced apart from each other to accommodate and support a corresponding bale 2. The spacing between the support members 64 of the respective pairs of support members 64 and 65 is such that when two bales 2 are supported on the respective pairs of support members 64 and 65, the bales are located side by side relative to each other with the sides thereof just abutting each other. A plate member 67 is located extending between the adjacent support members 64 of the pairs of support members 64 and 65 for rollably accommodating a bale onto the pair of support members 64a and 65a as will be described in detail below.

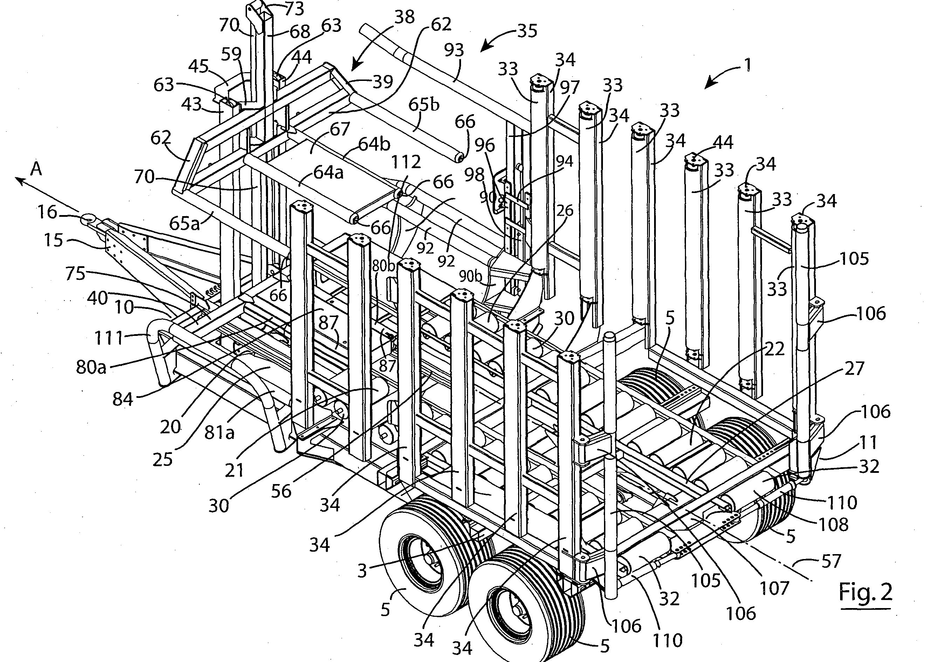

An upstanding member 68 extends upwardly from the carrier framework 62. A primary drive means, namely, a primary double-acting hydraulic drive ram 70 acting between a pair of brackets 71, see Fig. 17, carried on the lower channel cross-member 47 of the lifting mechanism 38 and a mounting bracket 73 adjacent the upper end of the upstanding member 68 urges the first receiving element 39 along the upstanding members 43 and 44 from a first level illustrated in Fig. 1 just below the level of the upper surface of the bed 19 defined by the front framework 25 for receiving a pair of bales, and a second level illustrated in Figs. 2 and 9 spaced apart above the first level for supporting the bales 2 at the second level, so that another pair of bales 2 may be delivered onto the front framework 25 and accommodated on the second receiving element 40 beneath the first receiving element 39. The bearing rollers 63 rotatably engage the channels of the upstanding members 43 and 44 for guiding the first receiving element 39 between the first level and the second level.

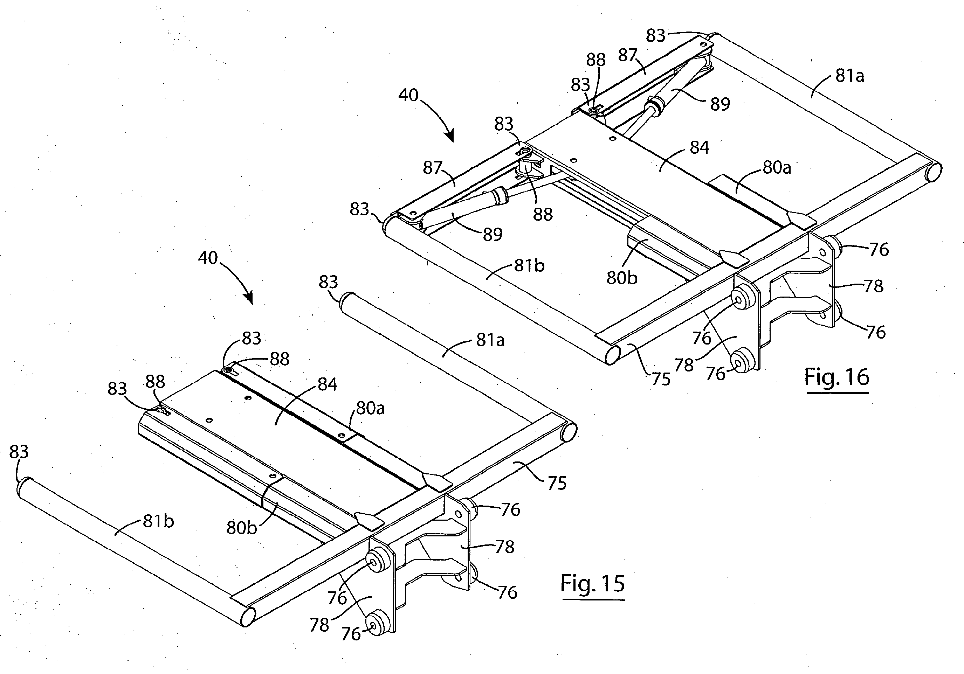

Referring now to Figs. 13 to 16, the second receiving element 40 comprises a cross-member 75 extending transversely relative to the trailer 1 which is also slideably carried on the lifting mechanism 38 by two pairs of bearing rollers 76 which are rotatably carried on mounting brackets 78 extending forwardly and rigidly from the cross-member 75, see Figs. 15 and 16. The bearing rollers 76 rollably engage the upstanding members 43 and 44 in the channel sections thereof for guiding the second receiving element 40 upwardly and downwardly on the lifting mechanism 38. Two pairs of elongated support members 80 and 81 extend in a generally rearwardly direction from the cross-member 75 and terminate in free distal ends 83 for engaging and supporting two bales 2. The bales 2 are supported in a similar manner on the pairs of the support members 80 and 81 of the second receiving element 40 as the bales 2 are supported on the pairs of the support members 64 and 65 of the first receiving element 39. A plate member 84 is located between the support members 80 of the respective pairs of support members 80 and 81 for accommodating a bale as will be described below onto the pair of support members 80a and 81a.

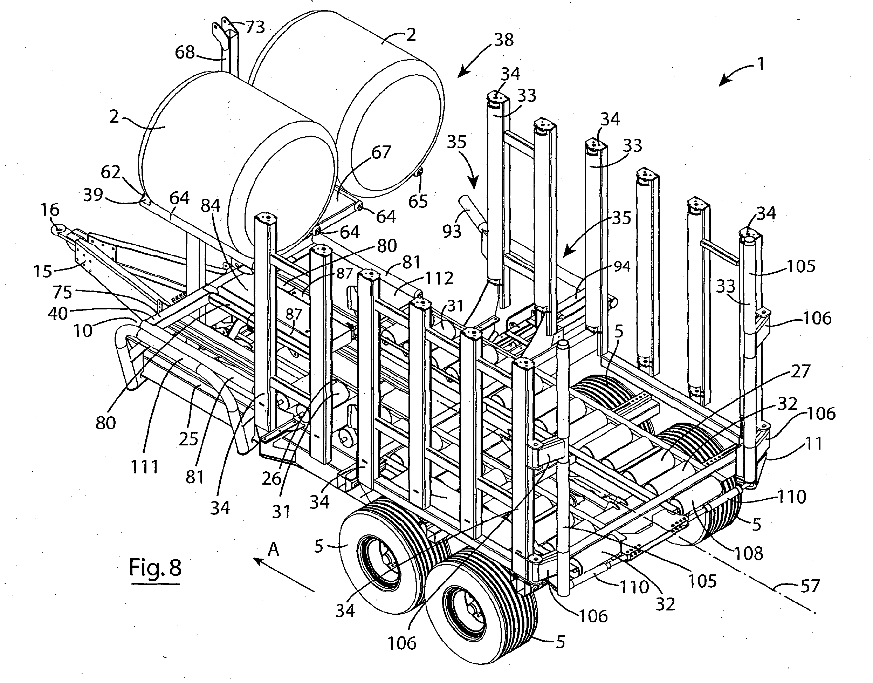

A drive transmission means comprising a drive transmission delay linkage 85i s coupled between the first receiving element 39 and the second receiving element 40 for transmitting drive from the primary drive ram 70 from the first receiving element 39 to the second receiving element 40, for in turn urging the second receiving element 40 from a third level illustrated in Fig. 8 just below the level of the upper surface of the bed 19 for receiving bales on the respective pairs of support members 80 and 81 to a fourth level illustrated in Figs. 2 and 5 which is above the third level, and which is just above the level of the bed 19 and clear of the bed 19, as the primary drive ram 70 urges the first receiving element 39 above the second level. By raising the second receiving element 40 to the fourth level just above and clearing the bed 19, the lifting mechanism 38 is freely urgeable by the main drive ram 60 along the bed 19 from the first location to the second location, for in turn transferring two pairs of bales on the first and second receiving elements 39 and 40 from the front framework 25 to the intermediate framework 26. Thus, when the first receiving element 39 carrying two bales 2 has been raised by the primary drive ram 70 to a level above the second level, so that the second receiving element 40 is at the fourth level also carrying two bales, the lifting mechanism 38 is urgeable by the main drive ram 60 from the first state to the second state for in turn urging the first and second receiving elements 39 and 40 from the first location to the second location, for in turn transferring the four bales 2 carried on the respective first and second receiving elements 39 and 40 from the front framework 25 to the intermediate framework 26.

Turning now in particular to the drive transmission delay linkage 85, which is only illustrated in Figs. 9, 11, 13, 14 and 19, the drive transmission delay linkage 85 comprises a pair of spaced apart elongated link members 115 which are rigidly secured to the cross member 75 of the second receiving element 40, and extend upwardly therefrom. An elongated slot 116 extending through each link member 115 extends longitudinally upwardly along the corresponding link member 115 from the second receiving element 40 towards an upper end 117 of the corresponding link member 115, and terminates at an upper end 119. A pair of spaced apart spigots 118 extend rearwardly from the carrier framework 62 of the first receiving element 39 and slideably engage the slots 116 in the corresponding link members 115.

The length of the slots 116 in the respective link members 117 from the second receiving element 40 to the respective upper ends 119 thereof is such that when the first receiving element 39 has been raised by the primary drive ram 70 to the second level the spigots 118 of the first receiving element 39 abut the corresponding link members 115 adjacent the upper ends 119 of the slots 116. Thus, when the spigots 118 abut the corresponding link members 115 adjacent the upper ends 119 of the slots 116 with the first receiving element 39 at the second level, further upward urging of the first receiving element 39 by the primary drive ram 70 results in drive from the primary drive ram 70 being transmitted to the second receiving element 40 through the link members 115 for in turn raising the second receiving element 40 from the third level to the fourth level.

A control circuit (not shown) is provided for controlling operation of the primary drive ram 70 for initially raising the first receiving element 39 from the first level to the second level, and then subsequently for raising the first receiving element 39 to a level above the second level for in turn raising the second receiving element 40 from the third level to the fourth level. The hydraulic control circuit comprises a first sensing means, in this embodiment of the invention a proximity sensor (not shown) mounted on one of the upstanding members 43 or 44 for detecting when the first receiving element 39 has been raised to the second level, and a pair of second sensors, in this embodiment of the invention a pair of load sensors (not shown) appropriately mounted on the front framework 25 for detecting when a pair of bales have been delivered onto the front framework 25 aligned with the corresponding pairs of support members 80 and 81 of the second receiving element 40. The control circuit (not shown) is responsive to the proximity sensor (not shown) mounted on one of the upstanding members 43 and 44 for deactivating the primary drive rams 70 when the first receiving element 39 has been raised to the second level, and the control circuit is also responsive to the respective load sensors detecting the presence of two bales on the front framework 29 aligned with the support members 80 and 81 of the second receiving element 40 for reactivating the primary drive ram 70 for urging the first receiving element 39 to a level above the second level, for in turn urging the second receiving element 40 from the third level to the fourth level.

A transfer means for urging and transferring bales in the second location 42 on the intermediate framework 26 of the bed 19 to a third location 82 on the rear framework 27 in this embodiment of the invention is provided by an abutment means comprising a pair of abutment members 87 which are pivotally coupled by respective pivot pins 88 to the distal ends 83 of the respective support members 80 of the second receiving element 40. The abutment members 87 are pivotal from an inoperative state illustrated in Fig. 15 with the abutment members 87 lying parallel to and forming parts of the respective support members 80, and an operative state illustrated in Fig. 16 with the abutment members 87 extending transversely of the support members 80. In the operative state the abutment members 87 are configured to abut a pair of bales 2 supported in the second location 42 on the intermediate framework 26 when the second receiving element 40 is at the fourth level and the lifting mechanism is in the first state, and to urge the bales 2 supported on the intermediate framework 26 in the second location 42 rearwardly from the second location 42 into the third location 82 on the rear framework 27, as the lifting mechanism 38 is urged by the main drive ram 60 from the first state to the second state. The third location 82 is located on the rear framework 27 next to the second location 42.

A first urging means, namely, a pair of first double-acting hydraulic urging rams 89 acting between the corresponding abutment members 87 and the corresponding support members 80 operate the abutment members 87 between the inoperative state and the operative state.

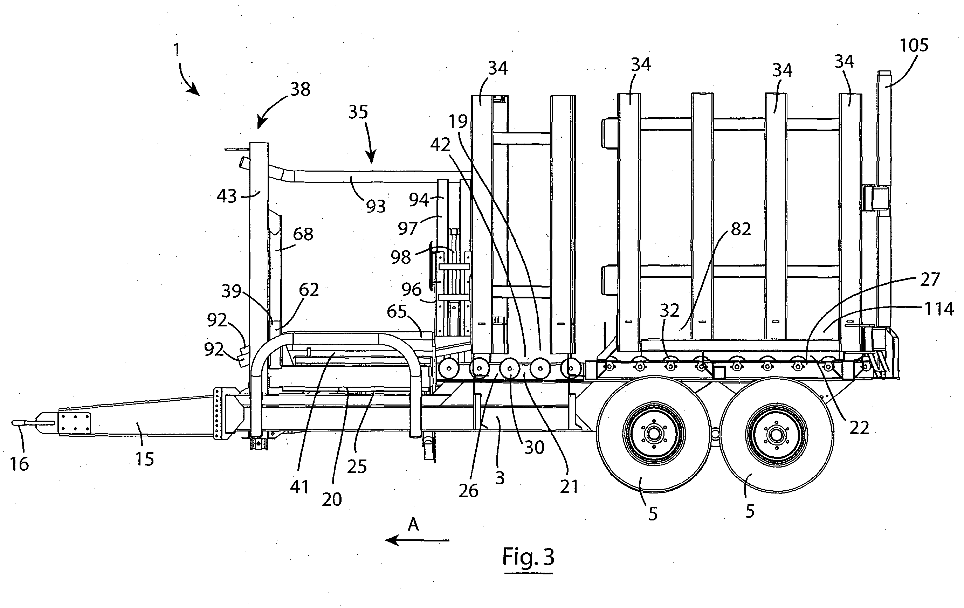

Turning now to the pick-up mechanism 35, and referring in particular to Figs. 3, 5, 11, 20, 21 and 23, the pick-up mechanism 35 comprises a pair of carrier brackets 90, namely, a forward carrier bracket 90a and a rearward carrier bracket 90b, which are pivotally coupled to the chassis 3 by pivot mounting brackets 91a and 91b, respectively, on pivot pins 86 which define a first common longitudinally extending pivot axis 86a, which extends generally parallel to the direction of normal forward motion of the trailer 1, namely, in the direction of the arrow A. A pick-up means comprising a pair of inner pick-up tines 92 co-operating with a spaced apart outer pick-up tine 93 are provided for engaging and supporting a bale with the longitudinal central geometrical axis of the bale extending generally parallel to the direction of normal forward motion of the trailer 1. The inner pick-up tines 92 are rigidly mounted on and carried by the carrier brackets 90a and 90b. An elongated tine carrier 94 extending rigidly from the rearward carrier bracket 90b extends transversely relative to the direction of normal forward motion of the trailer 1 and carries an outer pick-up tine 93 at its distal end with the outer pick-up tine 93 spaced apart from the inner pick-up tines 92 and extending substantially parallel to the inner pick-up tines 92. The inner and outer tines 92 and 93 when the pick-up mechanism 35 is in the pick-up state co-operate with each other for engaging and picking up a bale 2 from a field with the longitudinal central geometrical axis of the bale extending substantially parallel to the pick-up tines 92 and 93.

A second urging means, namely, a second double-acting hydraulic urging ram 95 acting between the chassis 3 and the rear carrier bracket 90b pivots the pick-up mechanism 35 about the first pivot axis 86a defined by the pivot pins 86 from the pick-up state to the delivery state, see Figs. 5, 11 and 23 for delivering a bale onto the front framework 25 with the longitudinal central geometrical axis of the bale extending generally parallel to the direction of normal forward motion of the trailer 1.

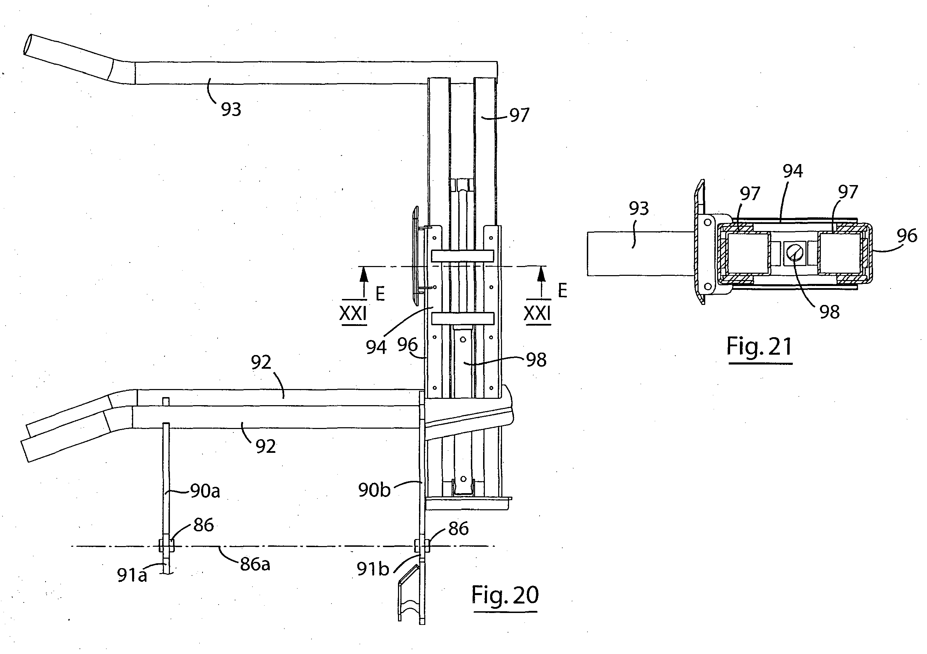

Turning now to the tine carrier 94, and referring in particular to Figs. 20 and 21, the tine carrier 94 comprises an elongated carrier housing 96 which is rigidly secured to the rearward carrier bracket 90b and extends sidewardly and transversely from the trailer 1. A pair of inner telescoping members 97 telescope into the carrier housing 96 and are slideable within the carrier housing 96 for adjusting the spacing between the outer pick-up tine 93 and the inner pick-up tines 92. A third urging means, namely, a third double-acting hydraulic urging ram 98 acting between the carrier housing 96 and the inner telescoping members 97 urges the inner telescoping members 97 inwardly and outwardly relative to the carrier housing 96 for in turn urging the outer pick-up tine 93 inwardly and outwardly relative to the inner pick-up tines 92. The third urging ram 98 is therefore operable when the pick-up mechanism 35 is in the pick-up state to firstly, adjust the spacing between the inner and outer pick-up tines 92 and 93 in order to locate a bale between the pick-up tines 92 and 93, and secondly, to urge the outer pick-up tine 93 inwardly towards the inner pick-up tines 92 to urge the bale inwardly towards the inner pick-up tines 92, until the bale is engaged by both the inner pick-up tines 92 and the outer pick-up tine 93, and the inner and outer pick-up tines co-operate for in turn supporting the bale during transfer of the bale from the ground onto the trailer 1 by the pick-up mechanism 35 with the longitudinal central geometrical axis of the bale extending generally parallel to the direction of normal forward motion of the trailer 1.

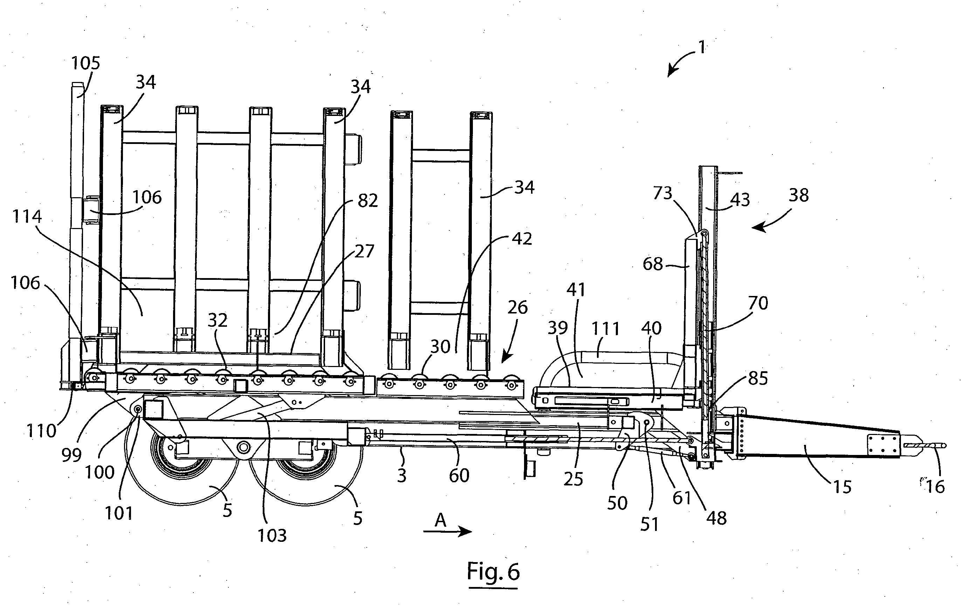

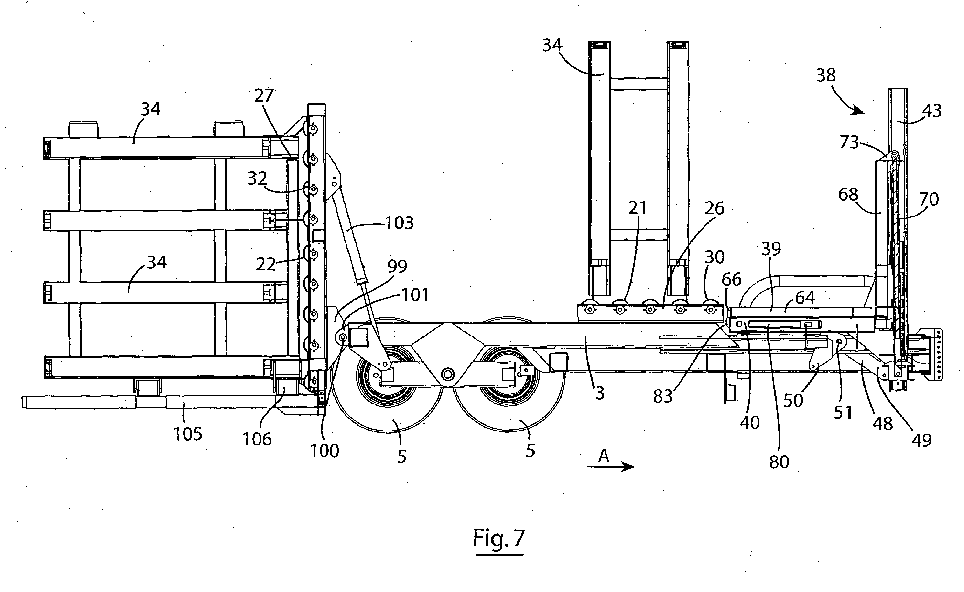

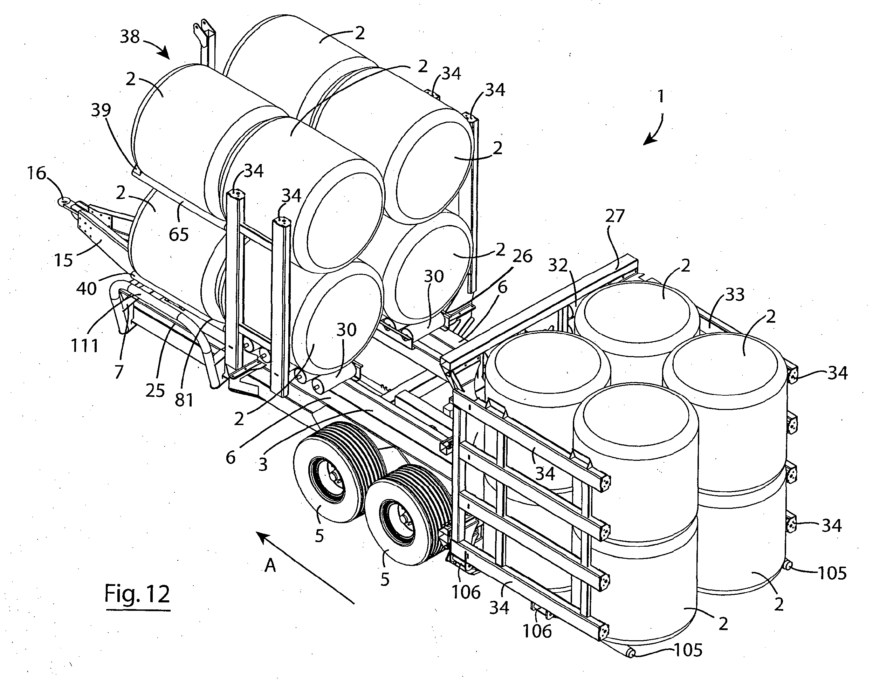

Returning now to the rear framework 27 which forms a rear portion of the bed 19 of the trailer 1, and referring in particular to Figs. 6, 7 and 12, the rear framework 27 is pivotally coupled to the chassis 3 adjacent the rear end 11 of the trailer 1 by a pair of spaced apart pivot brackets 99 which extend downwardly from the rear framework 27, and which are pivotally carried on respective pivot shafts 100, which in turn are carried on respective pairs of spaced apart mounting brackets 101 extending rearwardly from the rear end 11 of the chassis 3. The mounting brackets 101 carry the pivot shafts 100 so that the pivot shafts 100 define a common transversely extending pivot axis about which the rear framework 27 is pivotal between a hauling state illustrated in Fig. 6 with the rear framework 27 defining a rear portion of the bed 19 for supporting the bales thereon with the central geometrical axes of the bales 2 extending horizontally on the bed 19, and a discharge state illustrated in Figs. 7 and 12 with the bales 2 on the rear framework 27 oriented through an angle of approximately 90° for discharging the bales onto the ground in the 90° oriented state with the central geometrical axes of the bales 2 extending substantially vertically.

A tipping means, comprising a double-acting tipping hydraulic drive ram 103 acting between the chassis 3 and the rear framework 27 urges the rear framework 27 between the hauling state and the discharge state.

A first retaining means comprising a pair of upstanding retaining members 105 which are carried on respective mounting brackets 106, which in turn are pivotally carried on the corresponding rearmost ones of the upstanding side members 34 of the rear framework 27, are operable between a retaining state illustrated in Figs. 1 and 9 located in an open mouth 108 defined by the rearmost ones of the upstanding side members 34 of the rear framework 27 for retaining the bales 2 on the rear framework 27 during hauling of the bales, and also during pivoting of the rear framework 27 from the hauling state to discharge state, and an open state illustrated in Fig. 12 clear of the open mouth 108 for facilitating release of the bales from the rear framework 27 when the rear framework 27 is in the discharge state; and for facilitating pivoting of the rear framework 27 from the discharge state to the hauling state when the bales have been discharged onto the ground with the longitudinal central geometrical axis of the bales extending substantially vertically.

A pair of fourth urging means, namely, a pair of fourth double-acting hydraulic urging rams 110 acting between the rear framework 27 and the upstanding retaining members 105 urge the upstanding retaining members 105 between the retaining state and open state.

A support platform 112 is located in the front framework 25 adjacent the side of the bed 19 adjacent which the pick-up mechanism is pivotally coupled. The support platform 112 is located in the front framework 25 so that when the first and second receiving elements 39 and 40 are at the first and third levels, the support platform 112 is located between the support members 64b and 65b and 80b and 81b of the first and second receiving elements 39 and 40, respectively. The support platform 112 is provided to absorb the impact of the bales as they are being delivered onto the bed 19 from the pick-up mechanism 35 in order to avoid damaging the support members 64b and 65b and 80b and 81b of the first and second receiving elements 39 and 40 due to the impact of the bale on the bed 19 as it is being delivered from the pick-up mechanism 35 onto the bed 19.

A stop frame 111 extends generally upwardly from the front framework 25 adjacent the side thereof opposite the side of the front framework 25 at which the pick-up mechanism 35 is pivotally coupled for engaging and stopping the bales as they are delivered from the pick-up mechanism 35 onto the bed 19. It has been found that gravity and the momentum with which the bales are delivered from the pick-up mechanism 35 onto the bed 19 results in the first of a pair of the bales on impacting with the support platform 112 continuing to roll transversely across the front framework 25 over the plate members 67 and 84 of the first and second receiving elements 39 and 40, respectively, as the case may be. The stop frame 111 engages and stops the rolling bale. The stop frame 111 is located relative to the first and second receiving elements 39 and 40, so that when the bale is engaged by the stop frame 111, the bale with its longitudinal central geometrical axis extending generally parallel to the direction of normal forward motion of the trailer 1 is located and aligned between the support members 64a and 65a and 80a and 81a of the first and second receiving elements 39 and 40, respectively, as the case may be, so that the bale engaged by the stop frame 111 is ready to be engaged by the support members 64a and 65a or 80a and 81a of the first and second receiving elements 39 and 40, respectively, as the case may be.

In use, with the trailer 1 hitched to a tractor, and with the lifting mechanism 38 in the first state and the first receiving element 39 in the first locations at the first level just beneath the surface defined by the bed 19 and the second receiving element 40 at the third level just beneath the first receiving element 39, and with the rear framework 27 in the hauling state and the upstanding retaining members 105 in the retaining state, and with the pick-up mechanism 35 in the delivery state, the trailer 1 is ready for use. The trailer 1 is towed by the tractor sequentially from one of the bales to be picked up from the ground to the next bale. The trailer 1 approaches the bales with the longitudinal central geometrical axes of the respective bales extending generally parallel to the direction of normal forward motion of the trailer 1. As the trailer 1 is approaching the first of the bales to be picked up, the pick-up mechanism 35 is operated by the second urging ram 95 from the delivery state to the pick-up state. The third urging ram 98 is operated for urging the outer pick-up tine 93 outwardly relative to the inner pick-up tines 92. As the bale is approached, the third urging ram 98 is operated for urging the outer pick-up tine 93 inwardly towards the inner pick-up tines 92, so that the bale is urged against the inner pick-up tines 92, and is engaged between and supported on the inner and outer pick-up tines 92 and 93 with the longitudinal central geometrical axis of the bale extending substantially parallel to the inner and outer pick-up tines 92 and 93.

With the bale so supported on the inner and outer pick-up tines 92 and 93, the second urging ram 95 is operated for urging the pick-up mechanism 35 from the pick-up state to the delivery state, so that the bale is delivered by the pick-up mechanism 35 onto the support platform 112 of the front framework 25 above the support members 64b and 65b of the first receiving element 39. The force of gravity and the momentum with which the bale is delivered onto the support platform 112 results in the bale rolling from the support platform 112, across the plate member 67 of the first receiving element 39 towards the stop frame 111 extending upwardly from the chassis 3. The bale is stopped by the stop frame 111, which in turn aligns the bale between the pair of support members 64a and 65a of the first receiving element 39 with the longitudinal central geometrical axis of the bale 2 extending generally parallel to the direction of normal forward motion of the trailer 1.

The trailer 1 is then towed to the next bale to be picked up and as the trailer 1 is approaching the next bale, the pick-up mechanism 35 is pivoted from the delivery state to the pick-up state and the outer pick-up tine 93 is urged outwardly relative to the inner pick-up tines 92. Picking up of the next bale by the pick-up mechanism 35 is similar to that already described, and as the pick-up mechanism 35 with the bale supported thereon is pivoted from the pick-up state to the delivery state, the bale is delivered onto the support platform 112. The previously picked up bale which is now located above and aligned between the support members 64a and 65a of the first receiving element 39 prevents the bale just deposited onto the support platform 112 from rolling towards the stop frame 111, and thus retains the just deposited bale on the support platform 112 aligned between the pair of the support members 64b and 65b of the first receiving element 39 with the longitudinal central geometrical axis of the bale 2 extending generally parallel to the direction of normal forward motion of the trailer 1.

At this stage, two bales are now supported side by side on the front framework 25. The primary drive ram 70 is operated for urging the first receiving element 39 from the first level to the second level. As the support members 64 and 65 of the first receiving element 39 engage the bales on the bed 19, the bales are raised from the bed 19 to the second level, which is sufficient to accommodate two further bales beneath the first receiving element 39 on the bed 19.

Two further bales are picked up sequentially by the pick-up mechanism 35 as already described, and are sequentially delivered onto the support platform 112. The momentum with which the first of the two bales are delivered onto the platform 112 results in the first of the two bales rolling from the support platform 112 towards the stop frame 111 across the plate member 84 of the second receiving element 40. The stop frame 111 stops the bale which is then aligned between the pair of the support members 80a and 81a of the second receiving element 40 with the longitudinal central geometrical axis of the bale centred and aligned with the support members 80a and 81a. The second of the two bales is delivered onto the support platform 112 beside the first bale as already described with reference to the first receiving element 39, and the second bale is aligned between the pair of the support members 80a and 81a of the second receiving element 40.

The primary drive ram 70 is again activated for raising the first receiving element 39 to a level above the second level for in turn raising the second receiving element 40 from the third level to the fourth level, and as the support members 80 and 81 engage the two bales supported on the front framework 25, the bales are raised by the second receiving element 40 to the fourth level with the second receiving element 40 and the two bales supported thereon just above and clear of the bed 19.

With four bales supported on the first and second receiving elements 39 and 40, and with the first receiving element 39 at the level above the second level and the second receiving element 40 at the fourth level, the lifting mechanism 38 is urged by the main drive ram 60 from the first state to the second state for in turn urging the first and second receiving elements 39 and 40 from the first location 41 above the front framework 25 to the second location 42 above the intermediate framework 26. With the first and second receiving elements 39 and 40 in the second location 42 above the intermediate framework 26, the primary drive ram 70 is operated for lowering the first and second receiving elements 39 and 40, for in turn lowering the bales onto the intermediate framework 26 and disengaging the support members 64 and 65 and 80 and 81 from the bales.

With the support members 64 and 65 and 80 and 81 of the first and second receiving elements 39 and 40, respectively, disengaged from the corresponding bales, and with the second receiving element 40 still just above and clear of the bed 19, the main drive ram 60 is operated for returning the lifting mechanism 38 from the second state to the first state for in turn returning the first and second receiving elements 39 and 40 from the second location 42 to the first location 41. The primary ram 70 is operated for lowering the first and second receiving elements 39 and 40 to the first and third levels, respectively, with the second receiving element 40 beneath the first receiving element 39 and the first receiving element 39 just below the level of the upper surface of the front framework 25.

The trailer 1 is then ready for the next four bales to be loaded onto the first and second receiving elements 39 and 40 as already described.

With the next four bales now supported on the first and second receiving elements 39 and 40, the lifting mechanism 38 is urged by the main drive ram 60 from the first state to the second state for urging the bales on the first and second receiving elements 39 and 40 from the first location 41 to the second location 42 above the intermediate framework 26. As the lifting mechanism 38 is being urged from the first state to the second state, the previously deposited four bales which are in the second location 42 on the intermediate framework 26 are engaged by the bales on the lifting mechanism 38, and are urged along the forward and rearward roller track conveyors 30 and 32 into the third location 82 on the rear framework 27 by the bales on the lifting mechanism 38 now being urged from the first location to the second location. The first and second receiving elements 39 and 40 are disengaged from the bales as already described, thus depositing the bales from the lifting mechanism 38 in the second location on the intermediate framework 26, and the lifting mechanism 38 is returned to the first state by the main drive ram 60, as already described.

The next batch of four bales are loaded onto the first and second receiving elements 39 and 40 of the lifting mechanism 38. The lifting mechanism 38 is urged from the first state to the second state by the main drive ram 60 to urge the bales supported thereon from the first location 41 to the second location 42 on the intermediate framework 26. As the bales on the lifting mechanism 38 are being urged from the first state to the second state, the bales on the lifting mechanism 38 engage the bales supported in the second location 42 on the intermediate framework 26. The action of the bales supported on the lifting mechanism 38 on the bales supported in the second location 42 on the intermediate framework 26 as the lifting mechanism 38 is being urged from the first state to the second state results in the bales which are supported in the second location 42 on the intermediate framework 26 being urged from the second location 42 to the third location 82 on the rear framework 27, and the bales which had been supported on the rear framework 27 in the third location 82 being urged from the third location 82 along the rear roller track conveyors 32 to a fourth location 114 adjacent the rear end 11 of the trailer 1.

Loading of the trailer 1 continues until twelve bales are loaded onto the trailer 1, eight of the bales being supported on the rear framework 27, and four of the bales being supported on the intermediate framework 27. The last four of the bales are then loaded onto the lifting mechanism 38 as already described by the pick-up mechanism 35, and the first and second receiving elements 39 and 40 are lowered by the primary drive ram 70 to disengage the bales, so that the bales adjacent the lifting mechanism 38 are supported on the front framework 25 of the trailer 1.

With the trailer 1 so loaded and the pick-up mechanism 35 in the delivery state and retained therein by the second urging ram 95, the trailer 1 is then towed for hauling the bales to the destination at which the bales are to be stacked. On reaching the destination where the bales are to be stacked, the rear framework 27 is pivoted by the tipping drive ram 103 from the hauling state to the discharge state for discharging and orienting the eight bales supported on the rear framework 27 through an angle of approximately 90°, so that the eight bales are discharged from the rear framework 27 onto the ground standing with their respective longitudinal central geometrical axes extending substantially vertically. With the rear framework 27 in the discharge state, the retaining members 105 are pivoted from the retaining state to the open state by the fourth urging rams 110 to release the bales from the rear framework 27 to drop to the ground with the central geometrical axes of the bales extending substantially vertically. With the retaining members 105 in the open state, the rear framework 27 is pivoted by the tipping drive ram 103 from the discharge state to the hauling state.

With the rear framework 27 in the hauling state, the first and second receiving elements 39 and 40 are raised to the level above the second level and the fourth level, respectively, for supporting the bales in the first location 41 on the lifting mechanism 38. The main drive ram 60 is then operated for urging the lifting mechanism 38 from the first state to the second state so that the bales supported on the lifting mechanism 38 are urged from the first location 41 to the second location 42. As the lifting mechanism 38 is being urged from the first state to the second state, the bales on the lifting mechanism engage the bales supported in the second location 42 on the intermediate framework 26 for urging the bales supported in the second location 42 on the intermediate framework 26 into the third location 82 on the rear framework 27. The first and second receiving elements 39 and 40 are lowered for disengaging the support members 64, 65 and 80, 81 of the first and second receiving elements 39 and 40 from the bales which are now lowered and supported on the intermediate framework 26 in the second location 42. The lifting mechanism 38 is returned to the first state.

With the lifting mechanism 38 in the first state, the second receiving element 40 is raised to the fourth level. The abutment members 87 are pivoted from the inoperative state to the operative state extending transversely of the support members 80 for engaging the bales which are now supported in the second location 42 on the intermediate framework 26. The lifting mechanism 38 is urged by the main drive ram 60 from the first state to the second state, so that the abutment members 87 engage the lower two of the four bales supported in the second location 42 on the intermediate framework 26, and urge the four bales supported in the second location on the intermediate framework 26 to the third location 82 on the rear framework 27. This action in turn urges the four bales supported in the third location 82 on the rear framework 27 into the fourth location 114 adjacent the rear end of the rear framework 27, so that the remaining eight bales are now all supported on the rear framework 27. The rear framework 27 is operated by the tipping drive ram 103 from the hauling state to the discharge state for orienting the last eight bales through an angle of approximately 90° and for discharging the last eight bales from the trailer 1 to the ground as already described with the central geometrical axes of the discharged bales on the ground extending substantially vertically.

On completion of discharge of the last eight bales from the trailer 1, the rear framework 27 is returned from the discharge state to the hauling state, and the abutment members 87 are pivoted from the operative state to the inoperative state. The lifting mechanism 38 is returned from the second state to the first state, and the first and second receiving elements 39 and 40 are lowered to the first and third levels, respectively. The trailer 1 is then ready to collect the next load of bales.

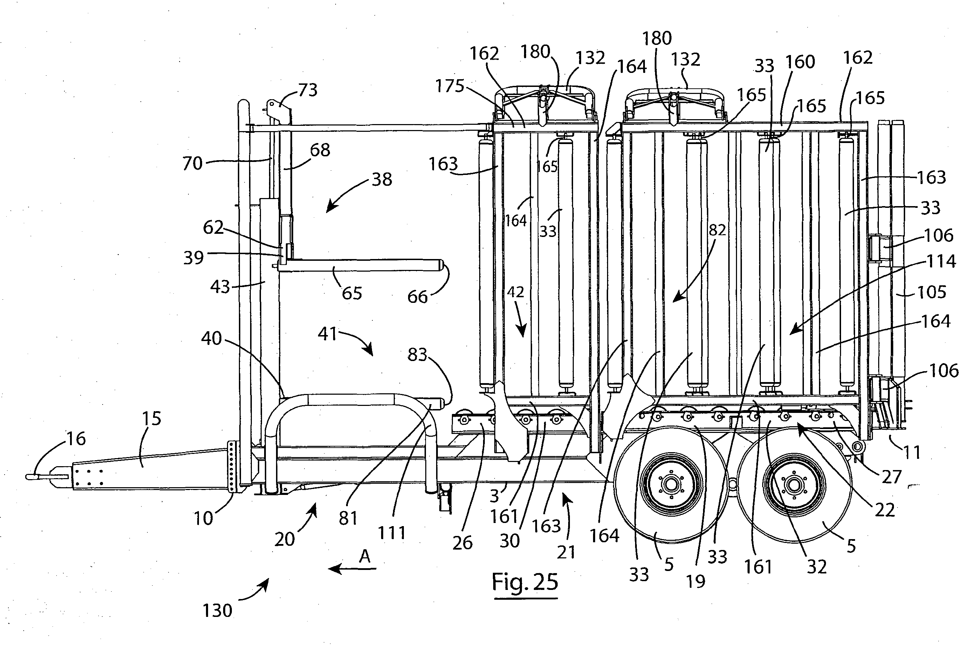

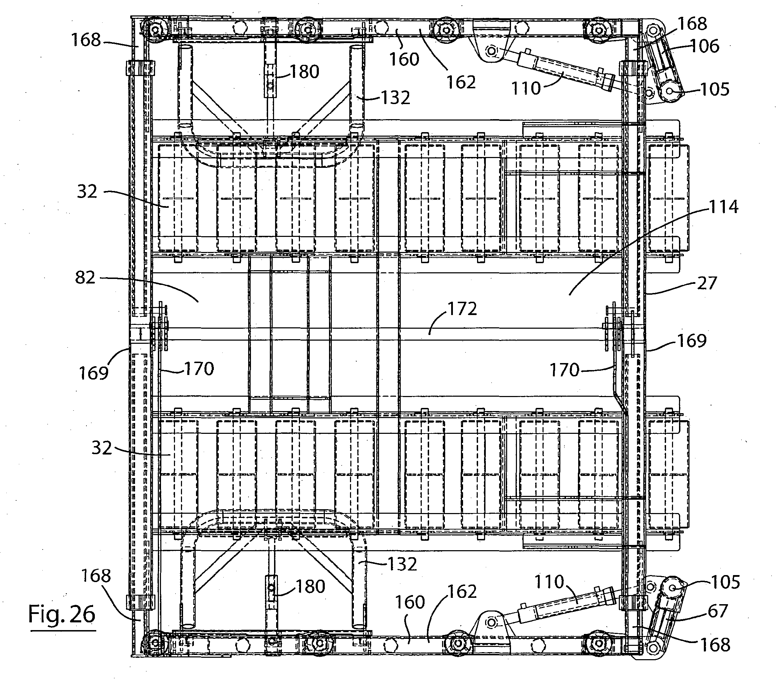

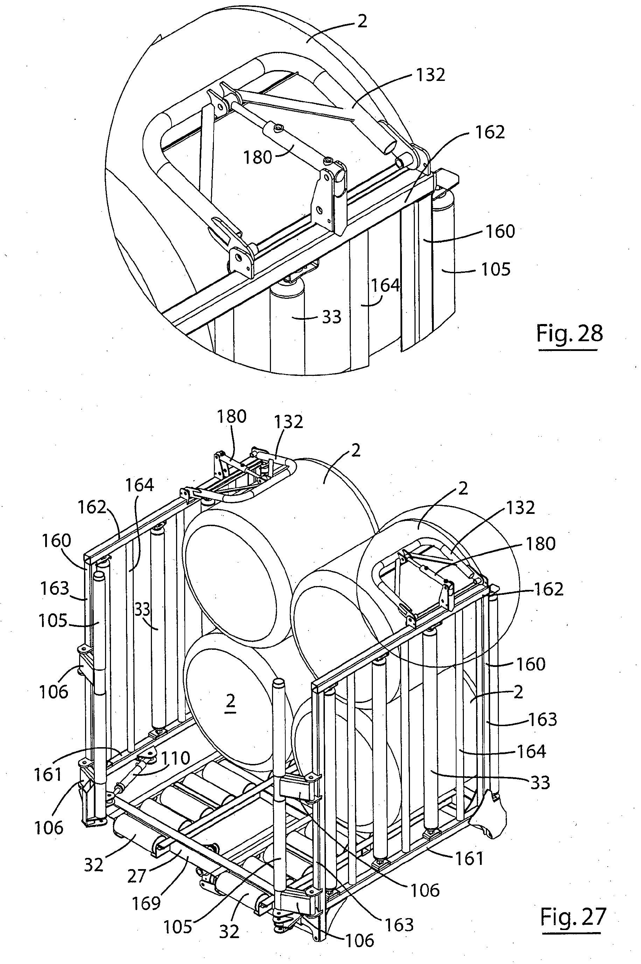

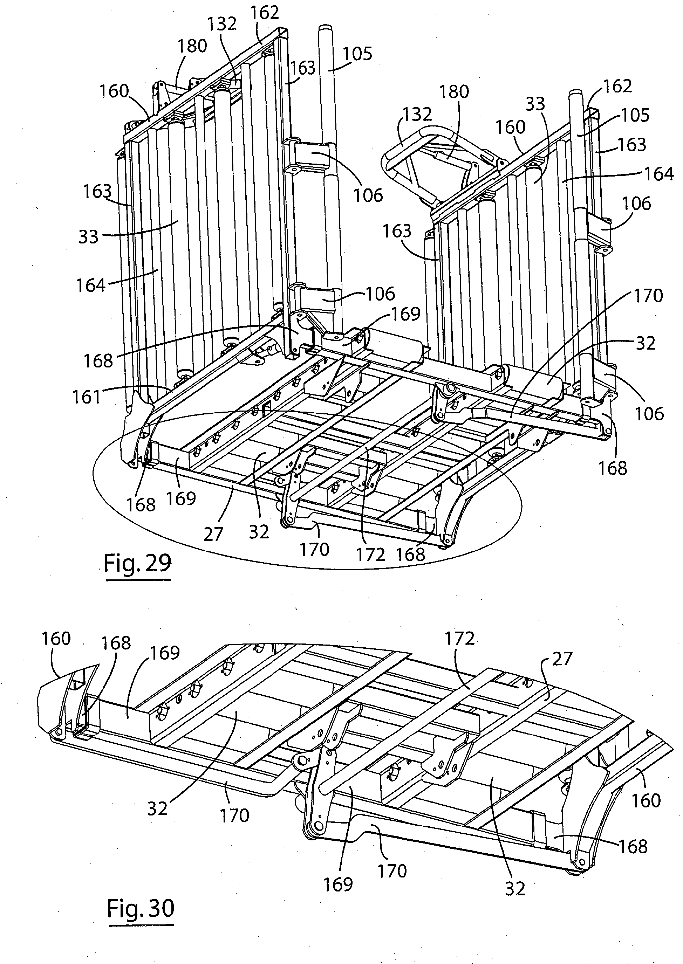

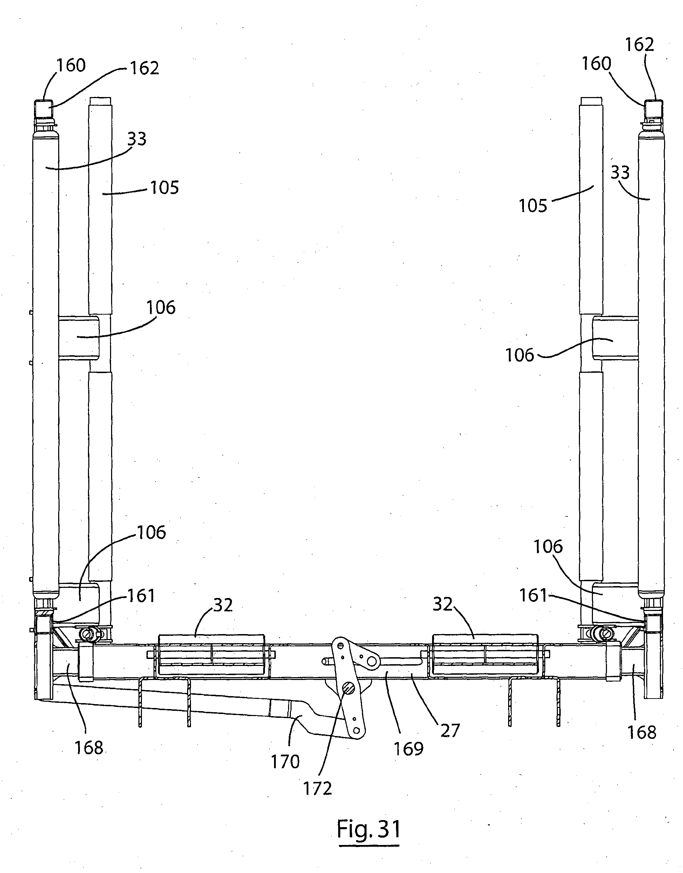

Referring now to Figs. 25 to 37, there is illustrated a trailer according to another embodiment of the invention, indicated generally by the reference numeral 130. The trailer 130 is substantially similar to the trailer 1, and similar components are identified by the same reference numerals. The main differences between the trailer 130 and the trailer 1 lies firstly in the pick-up mechanism 131, secondly, in the mounting of the upstanding side members 34 on the chassis 3 of the trailer 130, and thirdly, in the provision of second retaining means, namely, second retaining brackets 132 on the upstanding side members 34 of the rear framework 27 for retaining the bales on the rear framework 27 as the rear framework 27 is being tipped by the tipping drive ram 103 from the hauling state to the discharge state, and also for retaining the bales on the rear platform 27 during towing of the trailer 130 by a tractor or other towing vehicle. Second retaining brackets 132 are also located on the upstanding members 34 of the intermediate framework 26 for similarly retaining the bales on the intermediate framework 26 during towing of the trailer 130.

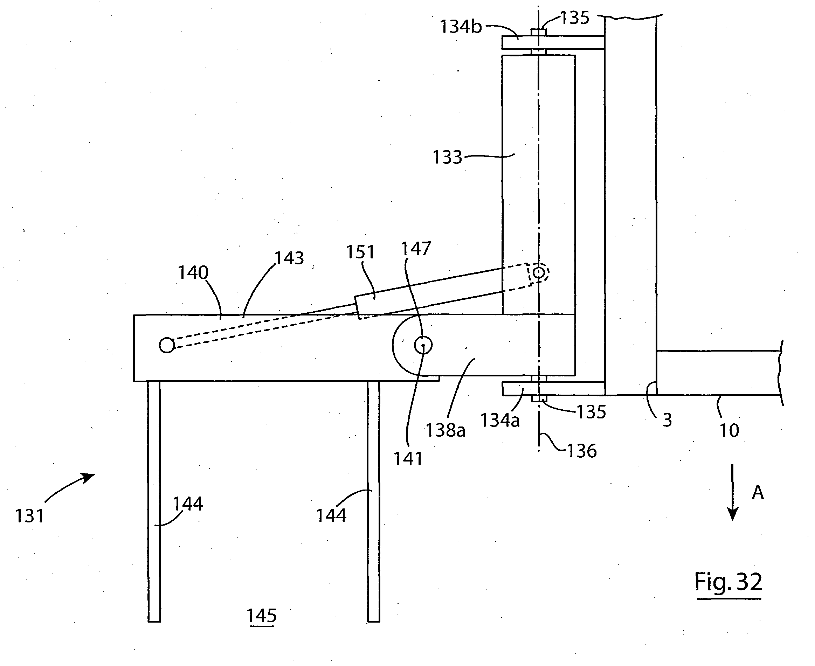

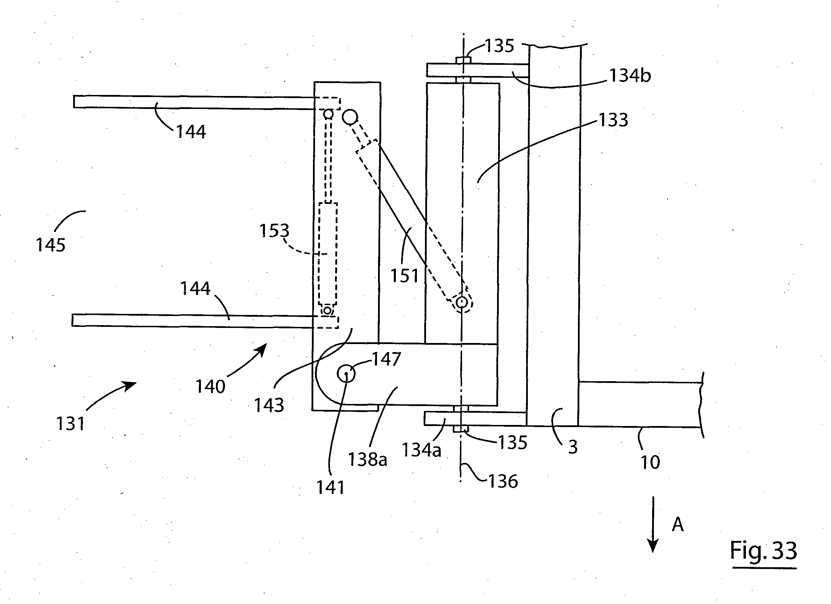

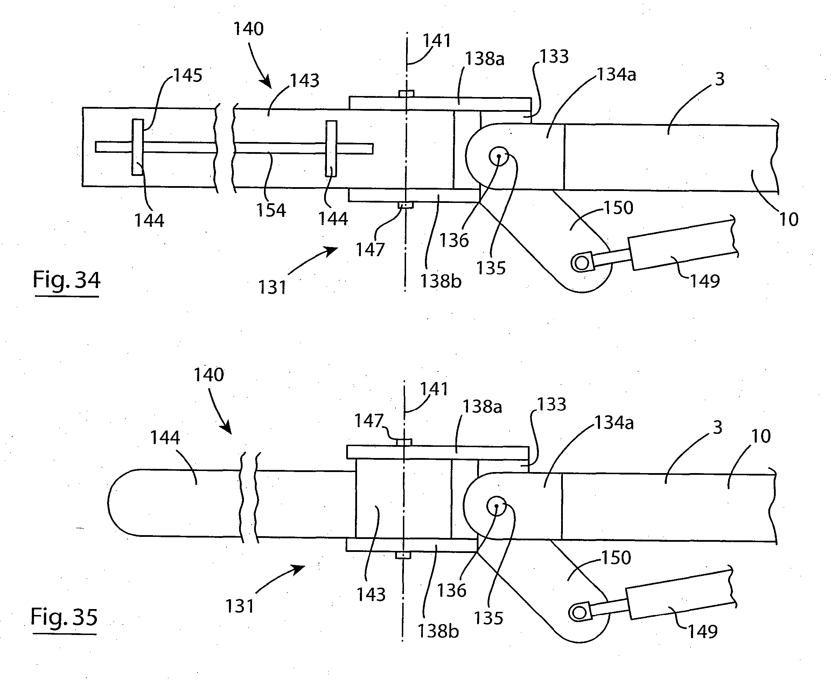

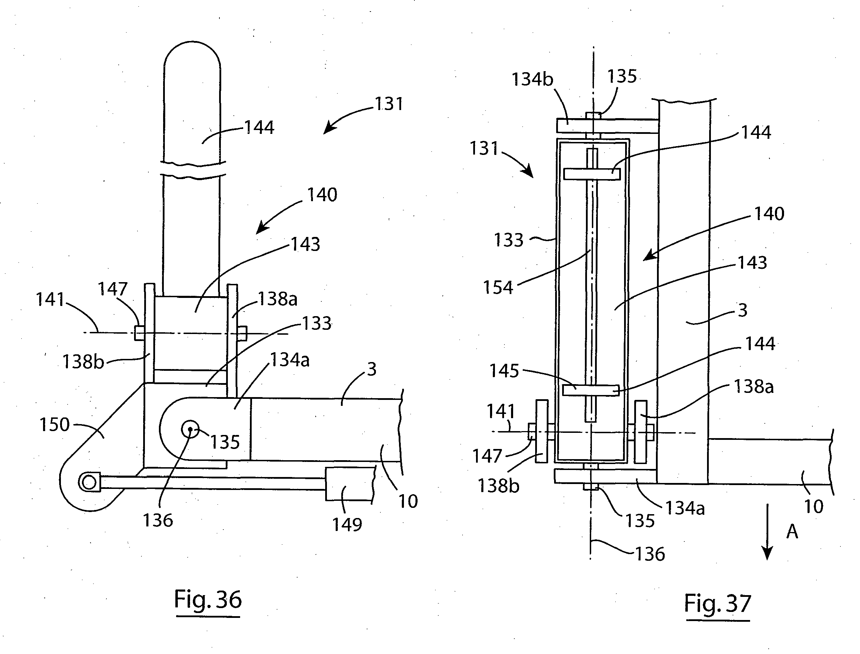

Turning initially to the pick-up mechanism 131, and referring in particular to Figs. 32 to 37, in this embodiment of the invention the pick-up mechanism 131 is configured for picking up bales disposed with the longitudinal central geometrical axis of each bale extending substantially transversely of the direction of normal forward motion of the trailer 130, and for orienting the bale through an angle of approximately 90° prior to being delivered onto the bed 19 of the trailer 130, so that the bales are delivered onto the bed 19 of the trailer 130 with the longitudinal central geometrical axes of the bales extending generally parallel to the direction of normal forward motion of the trailer 130. The pick-up mechanism 131 comprises an elongated pivotal member 133 which is pivotally coupled to the chassis 3 adjacent the front end 10 thereof by a pair of spaced apart pivot mounting brackets 134, namely, a forward pivot mounting bracket 134a and a rearward pivot mounting bracket 134b extending sidewardly from the chassis 3. A pair of pivot shafts 135 extending from the pivotal member 133 at respective opposite ends thereof pivotally engage the forward and rearward pivot mounting brackets 134, and define a first pivot axis 136 about which the pick-up mechanism 131 is pivotal from the pick-up state illustrated in Figs. 33 and 35 to the delivery state illustrated in Figs. 36 and 37 for delivering a bale onto the front framework 25 of the bed 19 of the trailer 130.

A pair of spaced apart carrier brackets 138, namely, an upper carrier bracket 138a and a lower carrier bracket 138b extend sidewardly from the pivotal member 133 adjacent the forward end thereof, and pivotally carry a pick-up means, namely, a clamping element 140 about a second pivot axis 141 extending orthogonally relative to the first pivot axis 136. The clamping element 140 is pivotal about the second pivot axis 141 between a first state illustrated in Figs. 32 and 34 for picking up a bale from the ground with the longitudinal central geometrical axis of the bale extending substantially transversely relative to the direction of normal forward motion of the trailer 130, and a second state illustrated in Figs. 33 and 35 with the bale oriented through an angle of approximately 90° with the longitudinal central geometrical axis of the bale extending generally parallel to the direction of normal forward motion of the trailer 130.

The clamping element 140 comprises an elongated carrier member 143 extending from the carrier brackets 138, which carries a pair of spaced apart clamp jaws 144 extending substantially perpendicularly from the carrier member 143 and defining an open mouth 145 within which a bale is engaged and clamped between the clamp jaws 144 with the longitudinal central geometrical axis of the bale extending substantially parallel to the carrier member 143. A pivot shaft 147 extending through the carrier member 143 adjacent one end thereof pivotally engages the carrier brackets 138 and defines the second pivot axis 141 about which the carrier member 143 is pivotal from the first state to the second state, and in turn the clamping element 140 is pivotal from the first state with the open mouth 145 defined between the clamp jaws 144 facing forwardly relative to the direction of normal forward motion of the trailer 130, and the second state with the open mouth 145 defined between the clamp jaws 144 facing generally sidewardly outwardly from the trailer 130.

In this embodiment of the invention the second urging means for urging the pick-up mechanism 131 about the first pivot axis 136 from the pick-up state to the delivery state comprises a second primary double-acting hydraulic urging ram 149 acting between the chassis 3 and a connecting bracket 150 extending rigidly and generally downwardly from the pivotal member 133.

A swivelling means comprising a second secondary double-acting hydraulic urging ram 151 acting between the pivotal member 133 and the carrier member 143 swivels the carrier member 143 about the second pivot axis 141 for in turn urging the clamping element 140 between the first state and the second state.

A third urging means comprising a third double-acting hydraulic urging ram 153 mounted in the carrier member 143 and acting between the clamp jaws 144 of the clamping element 140 adjusts the spacing between the clamp jaws 144 to facilitate engaging and clamping a bale between the clamp jaws 144. The third urging ram 153 is illustrated only in Fig. 33 in broken lines. In this embodiment of the invention a third guide means comprising an elongated guide track 154 extending longitudinally along the carrier member 143 slideably engages and guides the clamp jaws 144 as they are urged towards and away from each other by the third urging ram 153.

The operation of the pick-up mechanism 131 for picking up a bale rom the ground and delivering the bale from the ground onto the bed 19 of the trailer 130 will now be described. During travel of the trailer 130 from one bale to the next, the pick-up mechanism 131 is operated into the delivery state and is retained therein by the second primary urging ram 149. In the delivery state, the clamping element 140 is retained in the second state by the second secondary urging ram 151. As a bale to be picked up is being approached, the pick-up mechanism 131 is pivoted from the delivery state to the pick-up state by the second primary urging ram 149, and the clamping element 140 is pivoted from the second state to the first state by the second secondary urging ram 151 so that the clamping element 140 is located relatively closely to the ground with the open mouth 145 defined by the clamp jaws 144 extending in a generally forwardly direction.

As the trailer 130 is moved further towards the bale, the bale is located within the open mouth 145 between the clamp jaws 144 with the longitudinal central geometrical axis of the bale extending substantially parallel to the carrier member 143. The third urging ram 153 is operated for urging the clamping jaws 144 towards each other in order to engage and tightly clamp the bale between the clamp jaws 144. With the bale tightly clamped between the clamp jaws 144 the second secondary urging ram 151 is operated to swivel the clamping element 140 from the first state to the second state, so that the longitudinal central geometrical axis of the bale clamped between the clamp jaws 144 extends generally parallel to the direction of normal forward motion of the trailer 130. With the clamping element 140 in the second state, the second primary urging ram 149 is operated for urging the pick-up mechanism 131 from the pick-up state to the delivery state for delivering the bale onto the front framework 25 of the bed 19 with the longitudinal central geometrical axis of the bale extending generally parallel to the direction of normal forward motion of the trailer.

An advantage of providing the trailer 130 with the pick-up mechanism 131 is that the trailer 130 can be towed along and follow the track of a combined baler/bale wrapper to pick up bales discharged by the baler/bale wrapper. Combined baler/bale wrappers, in general, discharge a wrapped round bale with the longitudinal central geometrical axis of the wrapped bale extending generally transversely of the direction of normal forward motion of the combined baler/bale wrapper. Accordingly, by virtue of the fact that the pick-up mechanism 131 is configured to pick up the bales with the longitudinal central geometrical axes of the bales extending transversely of the direction of normal forward motion of the trailer 130, and orient the bales through an angle of approximately 90° with the longitudinal central geometrical axes of the bales extending generally parallel to the direction of normal forward motion of the trailer 130 prior to delivery of the bales onto the bed 19 of the trailer, the bales are delivered by the pick-up mechanism 131 onto the bed 19 with the longitudinal central geometrical axes of the bales extending generally parallel to the direction of normal forward motion of the trailer 130.

Turning now to the upstanding side members of the rear framework 27, in this embodiment of the invention the upstanding side members are provided on respective opposite sides of the rear framework 27 in the form of respective upstanding rear frames 160. Each upstanding rear frame 160 comprises a longitudinally extending lower side member 161 and a longitudinally extending upper side member 162 joined by upstanding end members 163. Spaced apart intermediate upstanding members 164 extend between the lower and upper side members 161 and 162. In this embodiment of the invention the rollers 33 are rotatably carried on shafts 165 which extend between the lower and upper side members 161 and 162. The respective upstanding rear frames 160 are carried on respective inner telescoping members 168, which extend from the respective opposite ends of the lower side members 161 of each of the upstanding rear frames 160, and which extend transversely of the bed 19. The inner telescoping members 168 are slideably carried in respective spaced apart outer transverse members 169 at the respective opposite ends of the rear framework 27. The outer transverse members 169 extend transversely of the bed 19. The inner telescoping members 168 of each outer transverse member 169 are coupled by a linkage mechanism 170. The linkage mechanisms 170 are operable coupled by a coupling shaft 172. A double-acting hydraulic ram (not shown) acting between the chassis 3 and the coupling shaft 172 acts to urge the inner telescoping members 168 of each outer transverse member 169 inwardly and outwardly of the outer transverse member 169 for in turn urging the upstanding rear frames 160 inwardly and outwardly towards each other for accommodating different diameters of bales on the rear framework 27, and for clamping the bales on the rear framework 27 together between the rear frames 160.

Turning now to the upstanding side members of the intermediate framework 26, in this embodiment of the invention the upstanding side members of the intermediate framework 26 are replaced by upstanding intermediate frames 175 which are substantially similar to the upstanding rear frames 160, and for convenience similar components are identified by the same reference numerals. In this embodiment of the invention, inner telescoping members (not shown) which are similar to the inner telescoping members 168 of the rear frames 160, extend from the lower side members 161 of each upstanding intermediate frame 175 at respective opposite ends thereof. The inner telescoping members of the intermediate frames 175 telescope into respective outer transverse members (not shown), which are similar to the outer transverse members 169 extending transversely of the bed 19. Linkage mechanisms (not shown), but similar to the linkage mechanisms 170 of the rear upstanding frames 160 are connected to the ends of the inner telescoping members (not shown) of the intermediate frames 175, and a double-acting hydraulic ram (not shown) operates the linkage mechanisms (not shown) to urge the inner telescoping members (not shown) inwardly and outwardly of the respective corresponding outer transverse members (not shown) for in turn urging the upstanding intermediate frames 175 inwardly and outwardly of the intermediate framework 26 for in turn accommodating different diameters of bales and for clamping the bales on the intermediate framework 26 between the upstanding intermediate frames 175.

Turning now to the second retaining brackets 132, the second retaining brackets 132 are pivotally coupled to the upper side members 162 of the respective upstanding rear frames 160 and the upstanding intermediate frames 175, and are pivotal between a retaining state illustrated in the drawings for engaging and retaining the bales on the rear framework 27 and the intermediate framework 26, respectively, and an open state (not shown) but extending generally upwardly from the upstanding rear and intermediate frames 160 and 175 for facilitating urging of the bales longitudinally rearwardly along the intermediate and the rear frameworks 26 and 27. The second retaining brackets 132 which are mounted on the upstanding rear frames 160 of the rear framework 27 are also provided so that in the retaining state the second retaining brackets 132 retain the bales on the rear framework 27 while the rear framework 27 is being pivoted from the hauling state to the discharge state. Fifth urging means comprising fifth double acting hydraulic urging rams 180 acting between the second retaining brackets 132 and the corresponding upstanding rear and intermediate frames 160 and 175 operate the second retaining brackets between the retaining and the open states.

Use of the trailer 130 is substantially similar to use of the trailer 1 with the following few exceptions. With the pick-up mechanism 131 in the delivery state and with the upstanding rear and intermediate frames 160 and 175 urged sidewardly outwardly by the respective drive rams (not shown) from the respective rear and intermediate frameworks 27 and 26, respectively, and with the second retaining members 132 in the open state, and the upstanding retaining members 105 in the retaining state the trailer 130 is towed to the first of the bales to be picked up. As the trailer is approaching the first of the bales, the pick-up mechanism 131 is initially pivoted by the second primary urging ram 149 from the delivery state to the pick-up state. The second secondary urging ram 151 is then operated for urging the clamping element 140 from the second state to the first state. The clamp jaws 144 are urged by the third urging ram 153 away from each other along the carrier member 143, and the bale with its longitudinal central geometrical axis extending transversely relative to the direction of normal forward motion of the trailer 130 is approached so that the bale is located between the clamp jaws 144. When the bale is located between the clamp jaws 144, the clamp jaws 144 are urged towards each other by the third urging ram 153 for engaging and clamping the bale therebetween with the longitudinal central geometrical axis of the bale extending substantially parallel to the carrier member 143.

The second secondary urging ram 151 is then operated for swivelling the clamping element 140 from the first state to the second state. With the bale still clamped between the clamp jaws 144, the second primary urging ram 149 is then operated for urging the pick-up mechanism 131 from the pick-up state to the delivery state. On reaching the delivery state, the clamp jaws 144 are urged apart by the third urging ram 153 to release the bale clamped therebetween, and the bale is delivered onto the support platform 112 in the front framework 25. Thereafter, loading of the trailer 130 with the bales is similar to that of the trailer 1, with the exception that once a batch of eight bales have been transferred to the rear framework 27, the upstanding rear frames 160 are urged towards each other to engage and clamp the bales on the rear framework 27. Similarly, once the batch of eight bales have been clamped on the rear framework 27, and the next batch of four bales have been transferred to the intermediate framework 26, the upstanding intermediate frames 175 are urged towards each other to clamp the bales on the intermediate framework 26 therebetween. However, as the bales are being urged along the intermediate and rear frameworks 26 and 27, it is envisaged that the rear and intermediate upstanding frames 160 and 175 will be urged outwardly to facilitate movement of the bales freely along the bed 19.

Once the trailer 130 is fully loaded, the second retaining brackets 132 are urged from the open state to the retaining state, and are retained in the retaining state by the fifth urging ram 180.

When the rear framework 27 is being urged from the hauling state to the discharge state for discharging the batch of eight bales supported thereon, the upstanding rear frames 160 are retained by the ram (not shown) and the linkage mechanisms 170 tightly clamping the bales on the rear framework 27 therebetween and the retaining brackets 132 of the rear framework 27 and the retaining members 105 are retained in the retaining state, until the rear framework 27 is in the fully discharge state. At that stage, as the upstanding retaining members 105 are being pivoted from the retaining state to the open state in order to allow the bales to drop from the rear framework 27, the second retaining brackets 132 on the upstanding rear frames 160 are pivoted from the retaining state to the open state, and the upstanding rear frames 160 are urged outwardly relative to each other, in order to allow the bales to drop freely from the rear platform 27 to the ground.

Otherwise, use of the trailer 130 is similar to that of the trailer 1.

While the trailers have been described for hauling round bales of forage material, the trailers may be used for hauling bales of forage material of any other shape, for example, parallelepiped bales. Indeed, the trailers may be used for hauling any other articles in two layers with the articles in the respective layers arranged in pairs side by side.

It will also be appreciated that while the trailers have been described as comprising specific pick-up mechanisms, any other suitable pick-up mechanisms may be used. It will also be appreciated that while it is desirable; it is not essential that the rear framework be pivotal between a hauling state and a discharge state for discharging the bales.

While hydraulic rams have been described for operating the various moveable and pivotal components, any other suitable urging and drive means may be provided.

While the trailers have been described as comprising a pick-up mechanism in certain cases, it is envisaged that the pick-up mechanism may be dispensed with.

While the transfer means for urging bales from the second location on the intermediate framework to a third location on the rear framework has been described as comprising the abutment members which are mounted on the support members of the second receiving element, any other suitable transfer means could be provided, for example, it is envisaged that the roller track conveyors 30 and 32 may be replaced with driven roller tracks, which themselves could be powered up to transfer the bales from the second location to the third location, and indeed also for transferring the bales in the third location of the rear framework to the fourth location adjacent the rear end of the rear framework. Needless to say, any other suitable transfer means, such as conveyor belts may be provided in the intermediate and/or the rear frameworks, and it is also envisaged that the lifting mechanism could be configured to travel through the entire length of the front and intermediate framework for delivering bales directly into the third location on the rear framework adjacent the intermediate framework.

It is envisaged that the pick-up mechanism 131 which has been described with reference to the trailer 130 could also be used in conjunction with the trailer 1.

It is also envisaged that the pick-up mechanism 35 of the trailer 1 could be provided with a pick-up means comprising a clamping element such as the clamping element of the pick-up mechanism of the trailer 130, instead of the inner and outer pick-up tines of the pick-up mechanism 35. In other words, the inner and outer pick-up tines of the pick-up mechanism 35 of the trailer 1 would be replaced by a pair of clamp jaws similar to the clamp jaws of the clamping element of the pick-up mechanism 131 of the trailer 130. In which case, the clamping element would be rigidly mounted on the pick-up mechanism 35 of the trailer 1.

It will be appreciated that while a specific drive transmission means for transmitting drive from the primary drive means through the first receiving means to the second receiving means has been described, any other suitable drive transmission means may be provided.

It is also envisaged that instead of the second receiving means being urged between the third and fourth levels by the primary drive ram through the first receiving means and the drive transmission means, the second receiving means could be urged between the third and fourth levels by a separate drive means, for example, a separate drive ram, which would act between the second receiving means and the lifting mechanism for raising and lowering the second receiving means independently of the first receiving means.

## Claims

1. A trailer comprising an elongated bed (19) extending longitudinally between a first end (10) and a second end (11) spaced apart longitudinally from the first end (10), a lifting mechanism (38) located on the trailer, a first receiving means (39) carried on the lifting mechanism (38) and being urgeable by the lifting mechanism (38) from a first level adjacent the bed (19) for receiving an article, to a second level spaced apart above the bed (19) for raising the article to the second level, a second receiving means (40) carried on the lifting mechanism (38) below the first receiving means (39) for receiving an article when the first receiving means (39) is at the second level, **characterised in that** the lifting mechanism (38) with the first and second receiving means (39, 40) is urgeable longitudinally along the bed (19) from a first state with the first and second receiving means (39, 40) located adjacent a first location (41) on the bed (19) for receiving the articles, to a second state adjacent a second location (42) spaced apart longitudinally along the bed (19) from the first location (41) for depositing the articles from the first and second receiving means (39, 40) one above the other on the bed (19) adjacent the second location (42).

2. A trailer as claimed in Claim 1 **characterised in that** a first guide means (56) is located in the bed (19) for guiding the lifting mechanism (38) between the first location (41) and the second location (42).

3. A trailer as claimed in Claim 1 or 2 **characterised in that** the second receiving means (40) is urgeable by the lifting mechanism (38) from a third level adjacent the bed (19) for receiving an article to a fourth level above the third level and just above the bed (19) for accommodating movement of the second receiving means (40) along the bed between the first and second locations.

4. A trailer as claimed in any preceding claim **characterised in that** a second guide means (43, 44) is located in the lifting mechanism (38) for guiding the first and second receiving means (39, 40) between the first and second levels and the third and fourth levels, respectively.

5. A trailer as claimed in any preceding claim **characterised in that** the first and second receiving means (39, 40) are each configured to support two articles side by side thereon.

6. A trailer as claimed in any preceding claim **characterised in that** a transfer means (87) is provided for urging an article from the second location (42) longitudinally along the bed (19) in a direction towards the second end (11) of the bed (19).

7. A trailer as claimed in Claim 6 **characterised in that** the transfer means (87) comprises an abutment means (87) carried on the lifting mechanism (38), the abutment means (87) being configured for engaging an article in the second location (42) when the lifting mechanism (38) is in the first state for urging the article from the second location (42) in the direction towards the second end (11) of the bed (19) when the lifting mechanism (38) is urged from the first state to the second state.

8. A trailer as claimed in any preceding claim **characterised in that** the trailer comprises a pick-up mechanism (35, 131), the pick-up mechanism (35,131) being urgeable from a pick-up state for engaging and holding an article adjacent the ground to a delivery state for delivering the article onto one of the first and second receiving means, and comprising a pick-up means (92, 93, 140, 143, 144) configured to engage an article on the ground when the pick-up mechanism (35, 131) is in the pick-up state.

9. A trailer as claimed in Claim 8 **characterised in that** the pick-up mechanism (35, 131) is pivotal relative to the bed (19) about a first pivot axis (86a, 136), and is pivotal about the first pivot axis (86a, 136) between the pick-up state and the delivery state.

10. A trailer as claimed in Claim 8 or 9 **characterised in that** the pick-up means (140, 143, 144) is configured when the pick-up mechanism (131) is in the pick-up state to engage an article on the ground with the longitudinal central geometrical axis of the article extending generally transversely to the direction of normal forward motion of the trailer, and the pick-up means (140, 143, 144) is configured for orienting an article through an angle of approximately 90° when viewed in plan.

11. A trailer as claimed in Claim 10 **characterised in that** the pick-up means (140, 143, 144) is operable through an angle of approximately 90° between a first state for engaging an article with a longitudinal central geometrical axis of the article extending generally transversely of the direction of normal forward motion of the trailer and a second state with the longitudinal central geometrical axis of the article extending generally parallel to the direction of normal forward motion of the trailer.

12. A trailer as claimed in Claim 11 **characterised in that** the pick-up means (140, 143, 144) is pivotal relative to the bed (19) about a second pivot axis (141), between the first state and the second state, the second pivot axis (141) extending generally orthogonally relative to the first pivot axis (136) of the pick-up mechanism (131).

13. A trailer as claimed in any of Claims 8 to 12 **characterised in that** the pick-up means (131) comprises a clamping element (140) having a pair of spaced apart clamp jaws (144) urgeable towards each other for engaging and clamping an article therebetween.

14. A trailer as claimed in any preceding claim **characterised in that** a moveable portion (27) of the bed (19) adjacent the second end (11) thereof is moveably coupled to the trailer, and is moveable from a hauling state defining a corresponding portion of the bed (19) to a discharge state for discharging articles from the trailer with the articles oriented through an angle of approximately 90° when viewed in elevation.

15. A trailer as claimed in any preceding claim **characterised in that** the trailer is adapted for hauling bales of forage material.

## Patentansprüche

1. Anhänger umfassend eine Ladefläche (19), die sich in Längsrichtung zwischen einem ersten Ende (10) und einem zweiten Ende (11) erstreckt, das in Längsrichtung von dem ersten Ende (10) beabstandet ist, einen Hebemechanismus (38), der auf den Anhänger angeordnet ist, eine erste Aufnahmeeinrichtung (39), die auf dem Hebemechanismus (38) angeordnet ist und durch den Hebemechanismus (38) von einer ersten Ebene an dem Bett (19) zum Aufnehmen eines Gegenstands zu einer zweiten Ebene oberhalb und beabstandet zu dem Bett (19) bewegbar ist, um den Gegenstand auf die zweite Ebene anzuheben, eine zweite Aufnahmeeinrichtung (40), die auf dem Hebemechanismus (38) unterhalb der ersten Aufnahmeeinrichtung (39) zum Aufnehmen eines Gegenstands angeordnet ist, wenn die erste Aufnahmeeinrichtung (39) auf der zweiten Ebene ist,
**dadurch gekennzeichnet, dass** der Hebemechanismus (38) mit der ersten und zweiten Aufnahmeeinrichtung (39, 40) in Längsrichtung entlang der Ladefläche (19) von einer ersten Stellung, in der die erste und zweite Aufnahmeeinrichtung (39, 40) an einer ersten Position (41) auf der Ladefläche (19) zum Aufnehmen der Gegenstände angeordnet ist, zu einer zweiten Stellung an einer zweiten Position (42) bewegbar ist, die in Längsrichtung der Ladefläche (19) von der ersten Position (41) beabstandet ist, um die Gegenstände von der ersten und zweiten Aufnahmeeinrichtung (39, 40) übereinander auf der Ladefläche (19) an der zweiten Position (42) abzulegen.

2. Anhänger nach Anspruch 1, **dadurch gekennzeichnet, dass** eine erste Führungseinrichtung (56) in der Ladefläche (19) angeordnet ist, um den Hebemechanismus (38) zwischen der ersten Position (41) und der zweiten Position (42) zu führen.

3. Anhänger nach Anspruch 1 oder 2, **dadurch gekennzeichnet, dass** die zweite Aufnahmeeinrichtung (40) mittels des Hebemechanismus (38) von einer dritten Ebene an dem Bett (19) zum Aufnehmen eines Gegenstands zu einer vierten Ebene oberhalb der dritten Ebene und oberhalb des Bettes (19) bewegbar ist, um eine Bewegung der zweiten Aufnahmeeinrichtung (40) entlang der Ladefläche zwischen der ersten und zweiten Position zu ermöglichen.

4. Anhänger nach einem der vorhergehenden Ansprüche, **dadurch gekennzeichnet, dass** eine zweite Führungseinrichtung (43, 44) in dem Hebemechanismus (38) angeordnet ist, um die erste und zweite Aufnahmeeinrichtung (39, 40) zwischen der ersten und zweiten Ebene bzw. der dritten und vierten Ebene zu führen.

5. Anhänger nach einem der vorhergehenden Ansprüche, **dadurch gekennzeichnet, dass** die erste und zweite Aufnahmeeinrichtung (39, 40) jeweils dazu eingerichtet sind, zwei Gegenstände nebeneinander darauf zu tragen.

6. Anhänger nach einem der vorhergehenden Ansprüche, **dadurch gekennzeichnet, dass** eine Verlagerungseinrichtung (87) vorgesehen ist, um einen Gegenstand von der zweiten Position (42) in Längsrichtung entlang der Ladefläche (19) in Richtung des zweiten Endes (11) der Ladefläche (19) zu bewegen.

7. Anhänger nach Anspruch 6, **dadurch gekennzeichnet, dass** die Verlagerungseinrichtung (87) ein Anschlagmittel (87) umfasst, das auf dem Hebemechanismus (38) angeordnet ist, wobei das Anschlagmittel (87) dazu eingerichtet ist, einen Gegenstand in der zweiten Position (42) aufzunehmen, wenn der Hebemechanismus (38) in der ersten Stellung ist, um den Gegenstand von der zweiten Position (42) in Richtung des zweiten Endes (11) der Ladefläche (19) zu bewegen, wenn der Hebemechanismus (38) von der ersten Stellung zu der zweiten Stellung bewegt wird.

8. Anhänger nach einem der vorhergehenden Ansprüche, **dadurch gekennzeichnet, dass** der Anhänger einen Aufnehmmechanismus (35, 131) umfasst, wobei der Aufnehmmechanismus (35, 131) von einer Aufnehmstellung zum Aufnehmen und Halten eines Gegenstands benachbart zu dem Boden zu einer Abgabestellung zum Abgeben des Gegenstands auf eine von der ersten und zweiten Aufnahmeeinrichtung bewegbar ist, und eine Aufnehmeinrichtung (92, 93, 140, 143, 144) umfasst, die dazu eingerichtet ist, einen Gegenstand auf dem Boden aufzunehmen, wenn der Aufnehmmechanismus (35, 131) in der Aufnehmstellung ist.

9. Anhänger nach Anspruch 8, **dadurch gekennzeichnet, dass** der Aufnehmmechanismus (35, 131) relativ zu der Ladefläche (19) um eine erste Schwenkachse (86 a, 136) schwenkbar ist, und ferner um die erste Schwenkachse (86 a, 136) zwischen der Aufnehmstellung und der Abgabestellung schwenkbar ist.

10. Anhänger nach Anspruch 8 oder 9, **dadurch gekennzeichnet, dass** die Aufnehmeinrichtung (140, 143, 144) dazu eingerichtet ist, wenn der Aufnehmmechanismus (131) in der Aufnahmestellung ist, einen Gegenstand auf dem Boden aufzunehmen, wobei sich die geometrische Längsmittelachse des Gegenstands im Wesentlichen quer zu der Richtung der normalen Vorwärtsbewegung des Anhängers erstreckt, und die Aufnehmeinrichtung (140, 143, 144) dazu eingerichtet ist, einen Gegenstand um einen Winkel von ungefähr 90° bei Draufsicht auszurichten.

11. Anhänger nach Anspruch 10, **dadurch gekennzeichnet, dass** die Aufnehmeinrichtung (140, 143, 144) mit einem Winkel von ungefähr 90° zwischen einer ersten Stellung zum Aufnehmen eines Gegenstands mit einer geometrischen Längsmittelachse des Gegenstands, die sich im Wesentlichen quer zu der Richtung der normalen Vorwärtsbewegung des Anhängers erstreckt, und einer zweiten Stellung betätigbar ist, in der sich die geometrische Längsmittelachse des Gegenstands im Wesentlichen parallel zu der Richtung der normalen Vorwärtsbewegung des Anhängers erstreckt.

12. Anhänger nach Anspruch 11, **dadurch gekennzeichnet, dass** die Aufnehmeinrichtung (140, 143, 144) relativ zu der Ladefläche (19) um eine zweite Schwenkachse (141) zwischen der ersten Stellung und der zweiten Stellung schwenkbar ist, wobei sich die zweite Schwenkachse (141) im Wesentlichen senkrecht relativ zu der ersten Schwenkachse (136) des Aufnehmmechanismus (131) erstreckt.

13. Anhänger nach einem der Ansprüche 8 bis 12, **dadurch gekennzeichnet, dass** die Aufnehmeinrichtung (131) ein Klemmelement (140) mit einem Paar von zueinander beabstandeten Klemmklauen (144) umfasst, die zueinander bewegbar sind, um einen Gegenstand aufzunehmen und dazwischen einzuklemmen.

14. Anhänger nach einem der vorhergehenden Ansprüche, **dadurch gekennzeichnet, dass** ein bewegbarer Abschnitt (27) der Ladefläche (19) benachbart zu dessen zweiten Ende (11) bewegbar mit dem Anhänger verbunden ist, und von einer Förderstellung, die einen entsprechenden Abschnitt der Ladefläche (19) definiert, zu einer Entladestellung bewegbar ist, um Gegenstände von dem Anhänger zu entladen, wobei die Gegenstände mit einem Winkel von ungefähr 90° in der Höhe betrachtet ausgerichtet sind.

15. Anhänger nach einem der vorhergehenden Ansprüche, **dadurch gekennzeichnet, dass** der Anhänger dazu eingerichtet ist, Futtermittelballen zu fördern.

## Revendications

1. Remorque comprenant un lit élongé (19) s'étendant de manière longitudinale entre une première extrémité (10) et une seconde extrémité (11) espacée de manière longitudinale de la première extrémité (10), un mécanisme de levage (38) situé sur la remorque, un premier moyen de réception (39) porté sur le mécanisme de levage (38) et qui peut être poussé par le mécanisme de levage (38) d'un premier niveau adjacent au lit (19) pour recevoir un article à un deuxième niveau espacé au-dessus du lit (19) pour soulever l'article au deuxième niveau, un second moyen de réception (40) porté sur le mécanisme de levage (38) au-dessous du premier moyen de réception (39) destiné à recevoir un article lorsque le premier moyen de réception (39) est au deuxième niveau, **caractérisé en ce que** le mécanisme de levage (38) avec les premier et second moyens de réception (39, 40) peut être poussé de manière longitudinale le long du lit (19) d'un premier état, avec les premier et second moyens de réception (39, 40) situés de manière adjacente à une première position (41) sur le lit (19) pour recevoir les articles, à un second état, adjacent à une seconde position (42) espacée de manière longitudinale le long du lit (19) de la première position (41), pour déposer les articles à partir des premier et second moyens de réception (39, 40) l'un au-dessus de l'autre sur le lit (19) de manière adjacente à la seconde position (42).

2. Remorque selon la revendication 1, **caractérisée en ce qu'**un premier moyen de guidage (56) est situé dans le lit (19) pour guider le mécanisme de levage (38) entre la première position (41) et la seconde position (42).

3. Remorque selon la revendication 1 ou 2, **caractérisée en ce que** le second moyen de réception (40) peut être poussé par le mécanisme de levage (38) d'un troisième niveau, adjacent au lit (19) pour recevoir un article, à un quatrième niveau, au-dessus du troisième niveau et juste au-dessus du lit (19), pour accueillir le mouvement du second moyen de réception (40) le long du lit entre les première et seconde positions.

4. Remorque selon l'une quelconque des revendications précédentes, **caractérisée en ce qu'**un second moyen de guidage (43, 44) est situé dans le mécanisme de levage (38) pour guider les premier et second moyens de réception (39, 40) entre les premier et deuxième niveaux et les troisième et quatrième niveaux, respectivement.

5. Remorque selon l'une quelconque des revendications précédentes, **caractérisée en ce que** les premier et second moyens de réception (39, 40) sont chacun conçus pour supporter deux articles côte-à-côte sur ceux-ci.

6. Remorque selon l'une quelconque des revendications précédentes, **caractérisée en ce qu'**un moyen de transfert (87) est disposé de façon à pousser un article de la seconde position (42) de manière longitudinale le long du lit (19) suivant une direction vers la seconde extrémité (11) du lit (19).

7. Remorque selon la revendication 6, **caractérisée en ce que** le moyen de transfert (87) comprend un moyen de butée (87) porté sur le mécanisme de levage (38), le moyen de butée (87) étant conçu pour entrer en prise avec un article dans la seconde position (42) lorsque le mécanisme de levage (38) est dans le premier état pour pousser l'article de la seconde position (42) suivant la direction vers la seconde extrémité (11) du lit (19) lorsque le mécanisme de levage (38) est poussé du premier état au second état.

8. Remorque selon l'une quelconque des revendications précédentes, **caractérisée en ce que** la remorque comprend un mécanisme de saisie (35, 131), le mécanisme de saisie (35, 131) pouvant être poussé d'un état de saisie, pour entrer en prise avec un article et le maintenir adjacent au sol, à un état de livraison, pour livrer l'article sur l'un des moyens parmi le premier et le second moyen de réception et comprenant un moyen de saisie (92, 93, 140, 143, 144) conçu pour entrer en prise avec un article au sol lorsque le mécanisme de saisie (35, 131) est dans l'état de saisie.

9. Remorque selon la revendication 8, **caractérisée en ce que** le mécanisme de saisie (35, 131) est pivotant par rapport au lit (19) autour d'un premier axe de pivot (86a, 136) et est pivotant autour du premier axe de pivot (86a, 136) entre l'état de saisie et l'état de livraison.

10. Remorque selon la revendication 8 ou 9, **caractérisée en ce que** le moyen de saisie (140, 143, 144) est conçu pour entrer en prise avec un article au sol, lorsque le mécanisme de saisie (131) est à l'état de saisie, avec l'axe géométrique central longitudinal s'étendant généralement de manière transversale vers la direction d'un mouvement normal vers l'avant de la remorque et le moyen de saisie (140, 143, 144) est conçu de façon à orienter un article à travers un angle d'environ 90° à partir d'une vue en plan.

11. Remorque selon la revendication 10, **caractérisée en ce que** le moyen de saisie (140, 143, 144) peut être activé à travers un angle d'environ 90° entre un premier état, permettant d'entrer en prise avec un article avec un axe géométrique central longitudinal de l'article s'étendant généralement de manière transversale à la direction d'un mouvement normal vers l'avant de la remorque, et un second état avec l'axe géométrique central longitudinal de l'article s'étendant généralement de manière parallèle à la direction d'un mouvement normal vers l'avant de la remorque.

12. Remorque selon la revendication 11, **caractérisée en ce que** le moyen de saisie (140, 143, 144) est pivotant par rapport au lit (19) autour d'un second axe de pivot (141), entre le premier état et le second état, le second axe de pivot (141) s'étendant généralement de manière orthogonale par rapport au premier axe de pivot (136) du mécanisme de saisie (131).

13. Remorque selon l'une quelconque des revendications 8 à 12, **caractérisée en ce que** le moyen de saisie (131) comprend un élément de serrage (140) ayant une paire de mâchoires de serrage espacées (144) pouvant être poussées l'une vers l'autre pour entrer en prise avec un article et serrer ce dernier entre celles-ci.

14. Remorque selon l'une quelconque des revendications précédentes, **caractérisée en ce qu'**une partie mobile (27) du lit (19) adjacente à la seconde extrémité (11) de celui-ci est couplée de manière mobile à la remorque et peut être déplacée d'un état de prise, définissant une partie correspondante du lit (19), à un état de décharge, permettant de décharger des articles de la remorque, les articles étant orientés à travers un angle d'environ 90° à partir d'une vue en élévation.

15. Remorque selon l'une quelconque des revendications précédentes, **caractérisée en ce que** la remorque est adaptée pour transporter des balles de fourrage.
